# EUROPEAN PATENT APPLICATION

(11) **EP 3 881 930 A1**
(43) Date of publication of application: **22.09.2021**
(21) Application number: 20163677.6
(22) Date of filing: 17.03.2020
(51) Int. Cl.: B01J 19/12, B01J 19/24

(54) **POLYGONAL FLOW REACTOR FOR PHOTOCHEMICAL PROCESSES**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

The invention provides a photoreactor assembly (1) comprising a reactor (30), wherein the reactor (30) is configured for hosting a fluid (100) to be treated with light source radiation (11) selected from one or more of UV radiation, visible radiation, and IR radiation, wherein the reactor (30) comprises a reactor wall (35) which is transmissive for the light source radiation (11), wherein the photoreactor assembly (1) further comprises: a light source arrangement (1010) comprising a plurality of light sources (10) configured to generate the light source radiation (11), wherein the reactor wall (35) is configured in a radiation receiving relationship with the plurality of light sources (10); one or more fluid transport channels (7) configured in functional contact with one or more of (i) the reactor (30) and (ii) one or more of the plurality of light sources (10); a cooling system (90) configured to transport a cooling fluid (91) through the one or more fluid transport channels (7).

## Description

### FIELD OF THE INVENTION

The invention relates to a photoreactor assembly and a method for treating a fluid with light source radiation.

### BACKGROUND OF THE INVENTION

Reactor systems for photo(chemical) processing a fluid are known in the art. US2016/0017266 for instance describes a photobioreactor for use in treating polluted air and producing biomass that may comprise, at least in part, a generally vertical tube or fluidic pathway, a generally vertical helical tube or fluidic pathway having a light source partially positioned within the helical fluidic pathway, a head cap assembly, and a base assembly. In one example, the light source may be a light emitting diode or a plurality of light emitting diodes (LEDs).

### SUMMARY OF THE INVENTION

Photochemical processing or photochemistry relates to the chemical effect of light. More in general photochemistry refers to a (chemical) reaction caused by absorption of light, especially ultraviolet light (radiation), visible light (radiation) and/or infrared radiation (light). Photochemistry may for instance be used to synthesize specific products. For instance, isomerization reactions or radical reactions may be initiated by light. Other naturally occurring processes that are induced by light are e.g. photosynthesis, or the formation of vitamin D with sunlight. Photochemistry may further e.g. be used to degrade/oxidize pollutants in water or e.g. air. Photochemical reactions may be carried out in a photochemical reactor or "photoreactor".

In most photochemical reactions, the reaction rate is however limited by the penetration of the light in the fluid containing the reactants. The light is absorbed in the fluid through which it travels essentially in correspondence with the Beer-Lambert law. The intensity of the light decreases logarithmically with respect to the travelled length. Reactants further away from the light source may therefore not obtain the required amount of light (energy) and the process may take more time, or e.g. may lead to a lower yield or efficiency.

Furthermore, commonly used light sources in photochemistry are low or medium pressure mercury lamps or fluorescent lamps. In addition to that, some reactions require a very specific wavelength region, and they may even be hampered by light from the source emitted at other wavelengths. In these cases, part of the spectrum has to be filtered out, which may lead to a low efficiency and/or complex reactor design.

Typically, a photochemistry system may be exposed to relatively low levels of irradiation. In such systems, the photochemical process may typically not be limited by the number of photons, so increasing optical power density may increase the output (e.g., in kg/hr) of the photochemical process. However, increasing the irradiation may provide additional challenges, such as absorption of "unused" (by the process) radiation, which may lead to heating of the system. Heating of the system, especially uncontrolled heating of the system, however, may be undesired.

In recent years the output of Light Emitting Diodes (LEDs), both direct LEDs with dominant wavelengths ranging for instance from UVC to IR wavelengths, and phosphor-converted LEDs, has increased drastically, making them interesting candidates for light sources for photochemistry. LEDs may provide high fluxes from small surfaces, especially if the LEDs can be kept at a relatively low temperature.

Hence, it is an aspect of the invention to provide an alternative photoreactor assembly, which preferably further at least partly obviates one or more of above-described drawbacks. Its further an aspect of the invention to provide an alternative (photochemical) method for treating a fluid with light source radiation, which preferably further at least partly obviates one or more of above-described drawbacks. The present invention may have as object to overcome or ameliorate at least one of the disadvantages of the prior art, or to provide a useful alternative.

Therefore, in a first aspect, the invention provides a photoreactor assembly comprising a reactor. The reactor may be configured for hosting a fluid (also: "reactor fluid"), especially a fluid to be treated with light source radiation. In embodiments, the light source radiation may be selected from one or more of UV radiation, visible radiation, and IR radiation. The reactor may comprise a reactor wall which is transmissive for the light source radiation. In embodiments, the photoreactor assembly may further comprise a light source arrangement. The light source arrangement may comprise a plurality of light sources configured to generate the light source radiation. In further embodiments, the reactor wall may be configured in a radiation receiving relationship with the light source arrangement, especially with the plurality of light sources. In embodiments, the photoreactor assembly may further comprise one or more fluid transport channels. The fluid transport channels may especially be configured in functional contact with one or more of (i) the reactor and (ii) the light source arrangement, especially one or more of the plurality of light sources. In further embodiments, the photoreactor assembly may further comprise a cooling system configured to transport a temperature control fluid, especially a cooling fluid, through the one or more fluid transport channels (also: "cooling fluid transport channels"). Especially, in embodiments the invention provides a photoreactor assembly comprising a reactor, wherein the reactor is configured for hosting a fluid to be treated with light source radiation selected from one or more of UV radiation, visible radiation, and IR radiation, wherein the reactor comprises a reactor wall which is transmissive for the light source radiation, wherein the photoreactor assembly further comprises: (a) a light source arrangement comprising a plurality of light sources configured to generate the light source radiation, wherein the reactor wall is configured in a radiation receiving relationship with the plurality of light sources; (b) one or more fluid transport channels configured in functional contact with one or more of (i) the reactor and (ii) one or more of the plurality of light sources; (c) a cooling system configured to transport a cooling fluid through the one or more fluid transport channels.

The photoreactor assembly according to the invention may provide the benefit that the output and/or stability of the photoreactor assembly may be improved. In particular, the invention may facilitate higher irradiation of the reactor as the cooling provided via the fluid transport channels may enable the use of a higher number of light sources, and/or a higher operating power of the light sources. In particular, in embodiments, both the light sources and the reactor may be cooled via the fluid transport channels. Further, the invention may enable achieving a higher yield of the desired product as high temperatures may otherwise facilitate thermal conversion to undesired by-products. Hence, the improved temperature control provided by the invention may limit the formation of by-products and improve the yield.

In such photoreactor assembly, operations may be performed at high efficiency, both in terms of light output versus power input of the light source, and in capturing of the light by the reactants. The photoreactor assembly may in embodiments be readily configured for the type of treatment to be carried out and, e.g., light sources may be (easily) replaced by other light sources, for instance for changing the wavelength of the light source radiation. In further specific embodiments, heat generated by the light source may be dissipated efficiently, allowing high energy input.

Hence, the invention may provide a photoreactor assembly (also "assembly") comprising a reactor (also "photoreactor"), wherein the reactor may be configured for hosting a (reactor) fluid, especially a (reactor) fluid to be treated with light source radiation.

The term "reactor" especially relates to a (photo)chemical reactor. The term essentially relates to an enclosed (reactor) volume in which the (photochemical) reaction may take place. The reactor comprises a reactor wall especially enclosing the (enclosed) volume. The reactor wall may define the reactor, especially a type of (the) reactor. Basic types of reactors are known to the person skilled in the art and comprise a (stirred) tank reactor and a tubular reactor. The reactor especially comprises a tubular reactor. The tubular reactor may comprise one or more tubes or pipes. The tube may comprise many different types of shapes and dimensions (see also below).

The photoreactor may be configured for treating a fluid (or a mix of fluids, including mixes comprising a gaseous fluid and a liquid fluid) with light source radiation, such as according to the method described herein. As described above, many photochemical reactions are known, such as dissociation reactions, isomerization or rearrangement reactions, addition reactions and substitution reactions, and, e.g., redox reactions. In embodiments, the (photochemical) reaction comprises a photocatalytic reaction. These photochemical reactions may especially use the energy of the light source radiation to change a quantum state of a system (an atom or a molecule) (that absorbs the energy) to an excited state. In the excited state, the system may successively further react with itself or other systems (atoms, molecules) and/or may initiate a further reaction. In specific embodiments, a rate of the photochemical reaction may be controlled by an added (photo-)catalysts or photosensitizer (to the reactor). The terms "treating", "treated" and the like, used herein, such as in the phrase "treating a fluid with the light source (light)" may especially relate to performing a photochemical reaction on a relevant (especially photosensitive) system (atom or molecule) in the fluid, especially thereby elevating the system (atom, molecule) to a state of higher energy and especially causing the further reaction. In embodiments, a photoactive compound may be provided to the fluid prior and/or during the irradiation of the fluid. For instance, a photocatalyst and/or a photosensitizer may be added to start and/or promote/accelerate the photochemical reaction.

Hence, the (reactor) fluid may comprise a system (atom and/or molecule) which may be elevated to a state of higher energy, which may especially cause a further reaction, through irradiation with the light source radiation. Herein, such atom or molecule may further also be named "a (photosensitive) reactant". The term "treating the fluid (with light)" and comparable terms may therefore especially relate to irradiating the fluid with the light source radiation (and reacting the reactant in the fluid). The term "irradiating the fluid" such as in the phrase "irradiating the fluid with the light source radiation" especially relates to (emitting/radiating light source radiation and) providing the light source radiation (in this respect to the fluid). Hence, herein the terms "providing light source radiation (to the fluid)" and the like and "irradiating (the fluid with) light source radiation" may especially be used interchangeably. Moreover, herein the terms "light" and "radiation" may be used interchangeably, especially in relation to the light source radiation.

The term "fluid" may relate to a plurality of (different) fluids. Further, the fluid may comprise a liquid and/or a gas. The fluid especially comprises the photosensitive reactant (including photocatalyst and/or photosensitizer), especially sensitive to the light source radiation. Especially, in embodiments the fluid is a liquid.

The photoreactor assembly may or may not comprise the light source arrangement. Hence, the invention also provides a photoreactor assembly comprising a reactor, wherein the reactor is configured for hosting a fluid to be treated with light source radiation selected from one or more of UV radiation, visible radiation, and IR radiation, wherein the reactor comprises a reactor wall which is transmissive for the light source radiation, wherein the photoreactor assembly further comprises: (a) one or more fluid transport channels configured in functional contact with the reactor; and (b) a cooling system configured to transport a cooling fluid through the one or more fluid transport channels.

Further, the photoreactor assembly may be configured to host the plurality of light sources. For instance, in embodiments the photoreactor may be configured to host a light source support element. The plurality of light sources may be functionally coupled to the light source support element. Especially, the light source support element may comprise (at least part of) the plurality of light sources. In particular, the photoreactor assembly may comprise a plurality of light source support elements, wherein the plurality of light source support elements (together) comprise the plurality of light sources.

Hence, in embodiments, the photoreactor assembly may further comprise a light source arrangement. The light source arrangement may comprise a plurality of (different) light sources configured to generate the light source radiation, especially configured to provide light source radiation to the photoreactor. The light source arrangement may especially comprise a radial light source arrangement, *i.e.,* a light source arrangement wherein the light sources are arranged along a circle (in a planar projection), such as when the light sources are regularly arranged along edges of a polygon, such as at centers of the edges of a hexagon. In particular, the light source arrangement may comprise a plurality of light sources radially arranged around the reactor and/or a plurality of light source radially arranged and encircled by the photoreactor.

Hence, in embodiments, the photoreactor assembly may comprise a plurality of light sources, especially wherein the light sources are arranged according to the light source arrangement. In particular, the light sources may be arranged (according to the light source arrangement) in a regular pattern, such as with constant distances between adjacent light sources. However, in further embodiments, the light sources may also be arranged in an irregular pattern, especially with varying distances. For example, in specific embodiments, a first set of light sources may be separated from one another by a first light source distance, and may be separated by a second set of light sources by a second light source distance, especially wherein the first set of light sources provide different light source radiation, especially a different wavelength of light source radiation, than the second set of light sources.

In embodiments, the light source arrangement may, especially in a planar projection, define a (first) polygon comprising (first) polygon edges. The polygon may especially be a convex polygon. Further, the polygon may especially be a regular polygon. Hence, in embodiments, the polygon may be a convex regular polygon. In embodiments, the light sources may be arranged at the inside of the polygon, especially when the polygon surrounds the reactor. In further embodiments, the light sources may be arranged at the outside of the polygon, especially when the reactor surrounds the polygon. In further embodiments, the light source arrangement may comprise an inner (first) polygon arranged surrounded by the reactor, and an outer (first) polygon arranged surrounding the reactor, wherein light sources are arranged on the outside of the inner polygon (facing the reactor) and at the inside of the outer polygon (facing the reactor).

In further embodiments, the light sources may be arranged at the polygon edges, especially at centers of the polygon edges. For example, in specific embodiments, a (respective) light source may be arranged at the center of each of the polygon edges.

In embodiments, the reactor may be a tubular reactor. In particular, the reactor wall may define the tubular reactor. In embodiments, the tubular reactor may be configured in a tubular arrangement, especially wherein the tubular arrangement comprises a coiled tubular arrangement. In further embodiments, the tubular reactor may be helically coiled. In further embodiments, the tubular arrangement may comprise a straight tubular arrangement.

In further embodiments, the tubular reactor may comprise an inner reactor wall and an outer reactor wall, together defining the tubular reactor. In further embodiments, one or more of the inner reactor wall and the outer reactor wall may be transmissive for the light source radiation, especially the inner reactor wall may be transmissive for the light source radiation, and/or especially the outer reactor wall may be transmissive for the light source radiation.

In further embodiments, the tubular arrangement may, especially in a planar view, define a (second) polygon comprising (second) polygon edges. The polygon may especially be a convex polygon. Further, the polygon may especially be a regular polygon. Hence, in embodiments, the polygon may be a convex regular polygon.

In further embodiments, the polygon, especially the first polygon, or especially the second polygon, may comprise at least 3 polygon edges, such as at least 4 polygon edges, especially at least 6 polygon edges, such as at least 8 polygon edges, especially at least 10 polygon edges. In further embodiments, the polygon, especially the first polygon, or especially the second polygon, may comprise at most 20 polygon edges, such as at most 16 polygon edges, especially at most 10 polygon edges. In further embodiments, the polygon, especially the first polygon, or especially the second polygon, may comprise 3-20 polygon edges, especially 4-10 polygon edges, such as 6-8 polygon edges.

In further embodiments, the tubular arrangement and the light source arrangement may both define polygons having mutually parallel configured polygon edges. In particular, the tubular arrangement and the light source arrangement may define polygons, especially polygons with the same number of polygon edges, and/or especially wherein the polygons are configured concentric, and/or especially wherein the polygons have parallel oriented polygon edges. In particular, the edges of the polygons spatially arranged in closest proximity may be arranged in parallel.

In embodiments wherein both the light source arrangement and the reactor have a polygon shape, especially with parallel edges, a higher efficiency may be obtained with a larger number of polygon edges, but with reducing returns, *i.e.,* the benefit from going from 4->6 edges may be greater than the benefit from going from 8->10 edges. A polygon having 6-8 polygon edges may be particularly beneficial in terms of efficiency. In particular, in embodiments, the light source arrangement may define a (first) polygon.

In further embodiments, at least a first subset of the plurality of light sources may enclose the tubular arrangement.

Similarly, in further embodiments, at least a second subset of the plurality of light sources may be enclosed by the tubular arrangement.

In embodiments, the plurality of light sources may comprise (single) chips-on-board light sources (COB) and/or (single) light emitting diodes (LEDs), and/or (single) laser diodes. In further embodiments, the light sources may comprise an array of light emitting diodes (LEDs) and/or laser diode sources. Hence, in embodiments the plurality of light sources may comprise one or more of chips-on-board light sources (COB), light emitting diodes (LEDs), and laser diodes.

In further embodiments, the light sources may be configured to provide light source radiation selected from one or more of UV radiation, visible radiation, and IR radiation. In further embodiments, at least part of the light sources may be configured to provide UV radiation. In further embodiments, at least part of the light sources may be configured to provide visible radiation. In further embodiments, at least part of the light sources may be configured to provide IR radiation.

Hence, in embodiments, the light source radiation may be selected from one or more of UV radiation, visible radiation, and IR radiation (also see further below). In further embodiments, the light source radiation may comprise UV radiation. In further embodiments, the light source radiation may comprise visible radiation. In further embodiments, the light source radiation may comprise IR radiation.

When absorbing (light source) radiation (light), the energy of a photon may be absorbed. The photon energy may also be indicated as *h*v, wherein *h* is Planck's constant and v is the photon's frequency. Hence, the amount of energy provided to the atom or molecule may be provided in discrete amounts and is especially a function of the frequency of the light (photon). Furthermore, the excitation of an atom or a molecule to a higher state may also require a specific amount of energy, which preferably is matched with the amount of energy provided by the photon. This may also explain that different photochemical reactions may require light having different wavelengths. Therefore, in embodiments, the photoreactor assembly may be configured to control a wavelength of the light source radiation.

In specific embodiments, two or more of the plurality of light sources may provide light source radiation having different spectral power distributions. For instance, a first light source may be configured to generate UV radiation and a second light source may be configured to generate visible radiation. In specific embodiments, the photoreactor assembly may comprise two or more light sources configured at different positions along an arrangement axis A1. The arrangement axis may e.g. be a length axis, or an axis of symmetry relative to the reactor. Hence, e.g. at different heights, different types of light sources may be provided. Hence, in embodiments the photoreactor may comprise a plurality of light sources wherein the light sources are configured to emit (radiate) light source radiation with different intensities and/or (with different) wavelength distributions. Each light source may also comprise a plurality of light emitting segments emitting (radiating) light source radiation with different intensities and/or wavelength distributions. The light sources and its segments may be arranged parallel or perpendicular to the tube axis. Such light source configurations may allow for a multi-step photochemical process with different wavelengths and/or intensities in one pass.

The term "arrangement axis" may herein especially refer to a length axis of the photoreactor assembly. In particular, the reactor and/or the light sources may be arranged around the arrangement axis. The arrangement axis may especially be an axis of rotational symmetry. For example, in an embodiment wherein the light source arrangement defines a hexagon, the arrangement axis may especially have a C₆ rotational symmetry.

In embodiments, the reactor may comprise a reactor wall. The reactor wall may especially be configured in a radiation receiving relationship with the light source arrangement, especially with the plurality of light sources. In embodiments, the reactor wall may be transmissive for the light source radiation. Photochemical reactions may be carried out in the reactor by irradiating fluid in the reactor with the light source radiation. The reactor wall may therefore be (configured to be) transmissive to the light source radiation. The term "transmissive" in phrases such as "transmissive to the light source radiation" especially refers to the property of allowing the light source radiation to pass through (the reactor wall). In embodiments, the reactor wall may be translucent for the light source radiation. Yet, in further embodiments, the reactor wall may be transparent for the light source radiation. The term "transmissive" does not necessarily imply that 100% of the light source radiation provided emitted to the reactor wall passes through the wall. In embodiments, at least 50% of the light source radiation emitted to the reactor wall may pass through the reactor wall. A relative amount of light source radiation passing through the reactor wall may e.g. depend on the wavelength of the light source radiation.

In embodiments, the reactor wall may be (configured to be) transmissive for UV radiation. In further embodiments, the reactor wall may for instance (also) be (configured to be) transmissive for visible radiation. In yet further embodiments, the reactor wall may be (configured to be) (also) transmissive for IR radiation. The term "radiation receiving relationship" relates to being configured such that radiation (light) emitted by the light source may directly or indirectly be provided to the reactor wall. The radiation (light) may substantially travel along a straight line, directly from the light source to the wall and/or the radiation (light) may travel from the light source to the wall via (light/radiation) reflecting elements (reflective for the light source radiation). Additionally, or alternatively, the radiation (light) may travel to the wall via scattering, diffusion, etc.

The term "(reactor) wall" may relate to a plurality of (different) reactor walls. The term may e.g. refer to the inner reactor wall and the outer reactor wall described above. The term may further e.g. refer to walls of a plurality of tubes.

In embodiments, the photoreactor assembly may further comprise one or more (cooling) fluid transport channels. The term "(cooling) fluid transport channel" especially relates to a channel/path configured in the photoreactor assembly which may hold a (cooling) fluid, especially through which a cooling fluid may flow (such as by a forced transport or spontaneously). In embodiments, the cooling fluid may be a gas, such as air. In further embodiments, the cooling fluid may be a liquid, such as water. The cooling fluid may be further be known as "a coolant".

In further embodiments, the fluid transport channels may especially be configured in functional contact with the reactor, *i.e.,* the fluid transport channels may be configured for cooling of the reactor. Hence, the fluid transport channels may be configured in thermal contact with the reactor. In particular, the fluid transport channels may be configured in fluid contact with the reactor.

In further embodiments, the fluid transport channels may especially be configured in functional contact with the light source arrangement, especially with one or more of the plurality of light sources, i.e., the fluid transport channels may be configured for cooling of the light source arrangement. Hence, the fluid transport channels may be configured in thermal contact with the light source arrangement. In particular, the fluid transport channels may be configured in fluid contact with the light source arrangement.

Especially, the term "thermal contact" indicates that an element thermal can exchange energy through the process of heat with another element. Especially, herein embodiments are described wherein an element may have thermal contact with a fluid in a duct. In embodiments, thermal contact can be achieved by physical contact. In embodiments, thermal contact may be achieved via a thermally conductive material, such as a thermally conductive glue (or thermally conductive adhesive). Thermal contact may also be achieved between two elements when the two elements are arranged relative to each other at a distance of equal to or less than about 10 µm, though larger distances, such as up to 100 µm may be possible. The shorter the distance, the better the thermal contact. Especially, the distance is 10 µm or less, such as 5 µm or less. The distance may be the distanced between two respective surfaces of the respective elements. The distance may be an average distance. For instance, the two elements may be in physical contact at one or more, such as a plurality of positions, but at one or more, especially a plurality of other positions, the elements are not in physical contact. For instance, this may be the case when one or both elements have a rough surface. Hence, in embodiments in average the distance between the two elements may be 10 µm or less (though larger average distances may be possible, such as up to 100 µm). In embodiments, the two surfaces of the two elements may be kept at a distance with one or more distance holders.

Herein, the term "thermal contact" may especially refer to an arrangement of elements that may provide a thermal conductivity of at least about 10 W/m/K, such as at least 20 W/m/K, such as at least 50 W/m/K. In embodiments, the term "thermal contact" may especially refer to an arrangement of elements that may provide a thermal conductivity of at least about 150 W/m/K, such as at least 170 W/m/K, especially at least 200 W/m/K. In embodiments, the term "thermal contact" may especially refer to an arrangement of elements that may provide a thermal conductivity of at least about 250 W/m/K, such as at least 300 W/m/K, especially at least 400 W/m/K. For instance, a metal support for a light source, wherein the metal support is in physical contact with the light source and in physical contact with a channel wall of a fluid transport channel, wherein the light source is not in the fluid transport channel, may provide a thermal conductivity between the light source and the fluid transport channel of at least about 10 W/m/K. Suitable thermally conductive materials, that may be used to provide the thermal contact, may be selected from the group consist of copper, aluminum, silver, gold, silicon carbide, aluminum nitride, boron nitride, aluminum silicon carbide, beryllium oxide, a silicon carbide composite, aluminum silicon carbide, an copper tungsten alloy, a copper molybdenum carbide, carbon, diamond, and graphite. Alternatively, or additionally, the thermally conductive material may comprise or consist of a ceramic material, such aluminum oxide of a garnet of the YAG-type family, such as YAG. Especially, the thermally conductive material may comprise e.g. copper or aluminum.

In further embodiments, the thermal contact may be provided by an arrangement comprising several types of materials, for instance in a stacked configuration. For example, in embodiments, the arrangement may comprise a stack of functional layers containing both thermal and optical layers. The optical layers may, for example, comprise one or more of BN, Alumina, Aluminum Di-Chroic layers, reflective polymers, and TiO₂ (in a matrix).

In embodiments, the photoreactor assembly may further comprise a cooling system. The cooling system may especially be configured to transport a cooling fluid through and/or along, especially through, the one or more fluid transport channels. In embodiments, the cooling system may comprise a gas transport device, especially wherein the cooling fluid comprises a cooling air. In further embodiments, the cooling system may comprise a liquid transporting device (also: "liquid transport device"), especially wherein the cooling fluid comprises a cooling liquid.

Hence, in further embodiments, the photoreactor assembly further comprises a cooling system configured for transporting a cooling fluid through and/or along one or more of the one or more cooling elements. The cooling system may e.g. comprise the gas transporting device, especially wherein the cooling fluid comprises a gas, such as air. Additionally, or alternatively the cooling system may comprise a liquid transporting device, such as a pump configured to pump a liquid (wherein the cooling fluid comprises a liquid). In embodiments, the liquid transporting device is configured for providing a liquid cooling fluid to one or more of the (cooling) fluid transport channels.

Hence, in specific embodiments, the photoreactor assembly may comprise a reactor, wherein the reactor is configured for hosting a fluid to be treated with light source radiation selected from one or more of UV radiation, visible radiation, and IR radiation, wherein the reactor comprises a reactor wall which is transmissive for the light source radiation, and wherein the photoreactor assembly further comprises: a light source arrangement comprising a plurality of light sources configured to generate the light source radiation, wherein the reactor wall is configured in a radiation receiving relationship with the plurality of light sources; one or more fluid transport channels configured in functional contact with one or more of (i) the reactor and (ii) one or more of the plurality of light sources; and a cooling system configured to transport a cooling fluid through the one or more fluid transport channels.

In embodiments, one or more of the plurality of light sources may at least partly be configured within at least one of the one or more fluid transport channels. Thereby, the one or more of the plurality of light sources may be cooled by the cooling fluid.

In further embodiments, at least part of the reactor wall may be configured within at least one of the one or more fluid transport channels. In particular, the reactor wall may be in fluid contact with the at least one of the one or more fluid transport channels. Thereby, the reactor, especially the reactor wall, may be cooled by the cooling fluid.

In further embodiments, at least part of the reactor wall may define (at least part of) a channel wall of at least one of the one or more fluid transport channels. Thereby, the reactor, especially the reactor wall, may be cooled by the cooling fluid.

In embodiments, the photoreactor assembly may comprise a reactor support element configured to support the reactor. The reactor support element may especially comprise a support body, especially wherein at least part of the reactor is configured in functional contact, especially thermal contact, with the support body. In further embodiments, the support body may comprise one or more of the one or more fluid transport channels. Especially, the support body may comprise a plurality of fluid transport channels, such as selected from the range of 2-100, like 3-50.

The term "support body" may herein relate to a plurality of (different) support bodies. The term may further relate to a plurality of (different) support elements together defining the support body. For instance, a plurality of support pillars may define the support body. In specific further embodiments, the support body may have a rotational symmetry. The support body may, e.g., comprise a cylindrical shape or define an elongated body with a polygonal shape (or cross section). In embodiments, the (tubular) reactor may be coiled around the support body (see also below). Additionally, or alternatively, the reactor may be enclosed by the support body. The reactor may especially be supported and contacted by the support body. Especially, at least part of the reactor may be configured in contact, especially functional contact, more especially thermal contact, with the support body. The support body may be configured for cooling at least parts of the photoreactor assembly (see also below), especially for dissipating heat from the reactor. The support body may in further embodiments comprise one or more thermally conductive elements and/or be in thermal contact with one or more thermally conductive elements (see further below). The reactor support element, especially the support body, may be substantially solid and may for instance comprise or be functionally coupled to a heat sink. Additionally, or alternatively, the reactor support element, especially the support body, may be a (hollow) body comprising one or more (cooling) fluid transport channels (see below). The support body may especially comprise a support body axis, especially configured parallel to the tubular arrangement axis (see below). The one or more (cooling) channels may in embodiments be configured parallel to the support body axis. The one or more fluid transport channels may in embodiments extend from a first end of the support body axis to an opposite end of the support body (along the support body axis). In further embodiments, extremes of the one or more fluid transport channels may be configured at the same end or side of the support body. Additionally or alternatively, the support element, especially the support body, may comprise a cavity e.g. for hosting a cooling fluid.

Hence, in embodiments, the photoreactor assembly may further comprise a reactor support element configured to support the reactor, wherein the reactor support element comprises a support body, wherein at least part of the (tubular) reactor is configured in thermal contact with the support body and wherein one or more thermally conductive elements are comprised by the support body or are in thermal contact with the support body.

In further embodiments, the support body may comprise a hollow (tubular) body, especially wherein the hollow body comprises a support body wall. In particular, the support body wall may comprise an inner support body face and an outer support body face. Hence, the inner support body face may define a support body space (also "hollow core"). The support body space may improve the cooling of the photoreactor assembly. In particular, the support body space may facilitate ventilation cooling.

In further embodiments, the inner support body face may define at least one of the one or more fluid transport channels. Especially, the inner support body face may define a support body space, especially wherein 20-100 vol.%, especially 50-99 vol.%, of the support body space is defined by a plurality of fluid transport channels. In further embodiments, at least 20% of the support body space may be defined by one or more fluid transport channels, such as at least 30%, especially at least 40%, such as at least 50%, especially at least 60%, such as at least 70%, especially at least 80%, such as at least 90%, especially at least 95%, including 100% of the support body space. In further embodiments, at most 100% of the support body space may be defined by one or more fluid transport channels., such as at most 99%, especially at most 98%, such as at most 95%, especially at most 90%, such as at most 80% of the support body space.

In such embodiments, the reactor may be configured at the side of the outer support body face, *i.e.,* the reactor may be arranged radially surrounding the support body wall.

In embodiments, the support body wall may have a circular cross-section, wherein the inner support body face and the outer support body face define diameters d1,d2, respectively. In further embodiments, the support body wall may have a polygonal cross-section, wherein the inner support body face and the outer support body face define diameters d1,d2, respectively, wherein the diameters d1, d2 define incircles of the inner support body face and the outer support body face, respectively.

In embodiments, 0.65^{∗}d2≤d1≤0.9^{∗}d2, especially 0.75^{∗}d2≤d1≤0.85^{∗}d2. Particularly good results may be obtained with such a diameter ratio. Hence, in further embodiments d1 ≥ 0.5^{∗}d2, such as ≥ 0.55^{∗}d2, especially ≥ 0.6^{∗}d2, such as ≥ 0.65^{∗}d2, especially ≥ 0.70^{∗}d2, such as ≥ 0.75^{∗}d2, especially ≥ 0.8^{∗}d2. In further embodiments, d2 ≤ 0.95^{∗}d2, especially ≤ 0.9^{∗}d2, such as ≤ 0.85^{∗}d2, such as ≤ 0.8^{∗}d2.

In embodiments, the photoreactor assembly may further comprise a light source support element. The light source support element may be configured to support the plurality of light sources. In particular, the light source support element may comprise a light source support body, especially wherein the plurality of light sources are configured in functional contact, especially thermal contact, with the light source support body. In further embodiments, the light source support body may comprise one or more of the one or more fluid transport channels. The light source support element with the light sources may define the light source arrangement of the light sources.

In embodiments, the photoreactor system, especially the cooling system, may comprise a fluid transporting device (or: "fluid transport device"). The fluid transporting device may especially be configured facing a thermally conductive element. In embodiments, the fluid transporting device may be configured to transport a cooling fluid along (and/or through) one or more of the cooling fluid transport channels. The term "fluid transporting device" may especially relate to a plurality of fluid transporting devices.

In further embodiments, the photoreactor system, especially the cooling system, more especially the fluid transporting device, may comprise a gas transporting device (or: "air transport device"), especially a gas transporting device selected from the group consisting of an air blower and a fan. The gas transporting device may especially be configured facing a thermally conductive element. In embodiments, the gas transporting device may be configured to transport a gas along (and/or through) one or more of the cooling fluid transport channels. The term "gas transporting device" may especially relate to a plurality of gas transporting devices.

In further embodiments, the photoreactor assembly may have a first side and a second side at opposite ends of the photoreactor assembly along the arrangement axis A1. Hence, the first side and the second side may be arranged at opposite sides of the support body. In further embodiments, the gas transporting device may be arranged at the first side and/or at the second side, especially (essentially) centralized along the arrangement axis A1 with respect to the support body at the first side and/or the second side of the support body.

In further embodiments, the gas transporting device may comprise a fan, especially a fan selected from the group comprising an axial fan and a centrifugal fan, especially an axial fan, or especially a centrifugal fan. The fan may especially comprise ventilator blades. In further embodiments, the ventilator blades may define a blade diameter d3, wherein d3>d2, such as d3 ≥ 1.1^{∗}d2, especially ≥ 1.2^{∗}d2, such as ≥ 1.3^{∗}d2. In further embodiments, d3 ≤ 3^{∗}d2, such as ≤2.5^{∗}d2, especially ≤ 2^{∗}d2, such as ≤ 1.5^{∗}d2. With such dimension, e.g. one or more of a flow through a fluid channel through a support body and a flow along the light source(s) may be created.

Hence, in a planar projection, the circle defined by the outer support body face (with diameter d2) of the support body wall may be arranged within the boundaries of a circle (with diameter d3) defined by the ventilator blades, especially arranged concentric within the boundaries of the circle defined by the ventilator blades.

During operations, the plurality of light sources may generate radiation. The light sources may further generate heat. The assembly may especially be configured to conduct/guide heat generated by the light source away from the light source. In embodiments, the photoreactor assembly comprises one or more thermally conductive elements configured in thermal contact with the one or more light sources.

In further embodiments, the light sources may be comprised by a plurality of light source elements and especially the light source elements are configured for moving/guiding the heat away from the light sources. The light source elements may in embodiments comprise one or more thermally conductive element configured in thermal contact with at least one of the light sources comprised by the light source elements.

Hence, in embodiments, the photoreactor assembly may comprise a plurality of light source elements, wherein each light source element comprises one or more of the plurality of light sources. Especially, each of the light source elements may comprise at least one thermally conductive element configured in functional contact, especially thermal contact, with the one or more of the plurality of light sources. In further embodiments, each of the light source elements may comprise a reflective element at a surface of the (respective) light source element facing the reactor wall, especially wherein the reflective element is (configured to be) reflective for the light source radiation. Thereby, impending light source radiation may be reflected to the reactor, which may result in a higher efficiency of the assembly.

The reflective element may especially be reflective for the light source radiation. The reflective element may comprise a (reflective) coating. In further embodiments, the surface of the light source element is reflective. The (surface) of the reflective element may e.g. comprise a metal being reflective for the light source radiation. In embodiments, the thermally conductive element may comprise the reflective element. In further embodiment, the surface of the thermally conductive element may be reflective.

In further embodiments, the photoreactor assembly may further comprise a second fluid transporting device. The second fluid transporting device may be configured to transport a cooling fluid along one or more of the thermally conductive elements, especially one or more of the thermally conductive elements configured in functional contact, especially thermal contact, with the one or more of the plurality of light sources. Thereby, the light source elements, especially the light sources, may be cooled by the cooling fluid via the thermally conductive element.

Hence, in embodiments, the photoreactor assembly may comprise a light source element, wherein the light source element comprises at least one light source of the plurality of light sources. The light source element may further comprise a thermally conductive element, especially wherein the thermally conductive element is in functional contact, especially thermal contact, with the at least one light source. The light source element may further comprise a reflective element, especially wherein the reflective element is arranged at a surface of the light source element facing the reactor wall. The reflective element may especially be (configured to be) reflective for the light source radiation. In further embodiments, the second fluid transporting device may be configured to transport a cooling fluid along the thermally conductive element. The term "light source support element" may also refer to a plurality of (different) light source support elements.

In embodiments, the light source elements together may provide the light source support element with light sources.

Hence, in further embodiments, the photoreactor assembly may comprise one or more cooling elements, wherein the one or more cooling elements comprise one or more of (i) one or more fluid transport channels and (ii) one or more thermally conductive elements, especially wherein the one or more cooling elements are in functional contact with one or more of (a) the reactor and (b) one or more of the light sources.

In further embodiments, the photoreactor, especially the tubular reactor, and the light source elements may define one or more fluid transport channels between the photoreactor and the light source elements, especially wherein a minimal distance between the tubular reactor and the light source elements defines a fluid transport channel width (d4), wherein the fluid transport channel width (d4) is selected from the range of 1-5 mm.

In further embodiments, the photoreactor assembly may further comprise light source element receiving elements, wherein the light source element receiving elements are configured to removably house the light source elements. Thereby, the photoreactor assembly may be modular with respect to the light source arrangement and/or the light source radiation. For example, a light source element comprising two UV light sources may be replaced by a light source element comprising three IR light sources.

In further embodiments, the photoreactor assembly may further comprise a wall enclosing the photoreactor and the light source elements, especially wherein the wall has a reflective surface facing the photoreactor, especially wherein the reflective surface is reflective for the light source radiation. In particular, the wall may (also) comprise a reflective element as described in relation to the light source element. The wall may e.g. comprise a reflective coating and/or a reflective surface facing the tubular reactor, wherein the reflective surface is reflective for the light source radiation. In such embodiments, light source radiation may be reflected to the reactor from the wall, which may improve the efficiency of the photoreactor assembly.

In embodiments, the photoreactor assembly may comprise a venturi element configured to guide the air flow. In particular, in further embodiments, the photoreactor assembly may comprise a first venturi element arranged between, with respect to a fluid flow, a fluid transporting device and the reactor, especially wherein the first venturi element is configured to constrict the space for the fluid flow and thereby (locally) increase the speed of the fluid flow. Thereby, the first venturi element may provide for more efficient cooling of the reactor and/or the light sources.

In further embodiments, the photoreactor assembly may comprise a second venturi element arranged at least partially downstream (with respect to a fluid flow) of the reactor, especially wherein the second venturi element is configured to guide a fluid flow to openings in the photoreactor assembly, especially (openings) in the support body. Thereby, the second venturi element may guide the fluid out of the photoreactor assembly, which may result in a smoother fluid flow, which may facilitate more efficient cooling of the reactor and/or the light sources.

In embodiments, the reactor may comprise a tubular reactor. The tubular reactor may comprise one or more tubes or pipes. The tube may comprise many different types of shapes and dimensions. The tube may e.g. comprise a (inner) circular cross section. Yet, the tube may in further embodiments comprise a rectangular cross section or, for instance, a hexagonal cross section and/or a polygonal cross section. In specific embodiments, the tube comprises a polygonal cross section. The tube may in further embodiments comprise a cylindrical shape comprising a ring-shaped cross section (annulus). Hence, the tube may in embodiment comprise a double walled tube, especially comprising an outer wall and an inner wall, wherein the outer wall and the inner wall (together) enclose the reactor volume. During operations, a fluid may flow between the inner and the outer wall. The inner and outer wall may especially be configured similar and coaxially with respect to each other. As such, the annulus (in combination with a length of the tube and optionally a total number of tubes) may define the reactor volume. In embodiments, the inner wall and the outer wall may define a polygon. In further embodiments, the tube comprises a single wall enclosing the reactor volume. The latter may herein also be referred to as a single walled tube.

The term "similar" in relations to shapes of an element especially means geometrically similar, i.e. one of the shapes may be identical to the other shape after a resize, flip, slide or turn. Similar shapes may be conformal.

The tube may be elongated. A length of the tube may especially be larger than an (inner) width of the tube. A ratio of the length of the tube to the (inner) width of the tube may in embodiments be larger than 5, especially larger than 10. The tube may comprise an (elongated) tube axis. In embodiments, the term "width" (of the tube) may relate to a characteristic (inner) distance (or size) between two opposite sides of the wall of the tube / a width of the annulus (for a double walled tube). Yet, in further embodiments (comprising a single walled tube), the term may relate to an (inner) width or an (inner) height of the tube (especially a (longest) distance between two opposite positions at the single wall of the tube, especially only a line perpendicular to the tube axis). The term may e.g. refer to an inner diameter of the tube (for a circular cross sections).

The term "annulus" may relate to a circular annulus as well as to a polygonal, such as a square, annulus (or any other geometry of a cross sectional area defined between the inner and the outer wall).

Further, the tube especially comprises an inlet opening and an outlet opening, arranged at extremes of the tube (and defining the length of the tube). A fluid flow provided at the inlet opening may especially exit the tube at the outlet opening. During operations a fluid may flow from the inlet opening to the outlet opening in "a flow direction" or " a direction of flow". The tube axis is especially (locally) configured parallel to the flow direction. Further, the tube especially does not comprise fluid flow restrictions in the tube. The tube is in embodiments configured for allowing a constant fluid velocity along the length of the tube. The tube may in embodiments comprise a (substantially) constant inner cross sectional area (or flow through cross sectional area).

The term "a tube" especially refers to "a pipe", "a channel", "an elongated (open) vessel", "tubing:", "piping", etc. that may hold the fluid, and especially in which the fluid may be transported. Hence, also terms like "tubing", "pipe", "piping", "channel", etc. may be used to refer to the tube. Further, the term "tube" may in embodiments refer to a plurality of tubes.

In specific embodiments, the tubular reactor comprises a plurality of tubes. The tubes are especially arranged parallel to each other. Hence, the tubular arrangement may in embodiments comprise a plurality of tubes. In embodiments, a tubular arrangement axis is especially configured parallel to the tube axis (such as of one or more of the plurality of tubes). In further embodiments, the tubular arrangement may especially have a rotational symmetry (especially around the tubular arrangement axis). The tubular arrangement may in embodiments define a circle or e.g. an ellipse. In further embodiments, the tubular arrangement may define a polygon (see also below). A double walled tube may, e.g., be configured to define one or more of the polygons or a circle (or an ellipse) described above. The tube may in specific embodiments comprise a plurality of (rectangular) panels or wall elements defining the wall. For instance, in an embodiment the inner wall comprises four panels or wall elements (defining the inner wall) and the outer wall comprises four panels/wall elements. These wall elements/panels may be arranged to provide a double walled rectangular (square) tube especially having a rectangular (square) annulus between the inner and the outer wall. Together, these (eight) wall elements/panels may therefore define the tube, wherein the tubular arrangement defines a rectangle (square). It will be understood that a cylindrical tube, and tubes having other (polygonal) shapes may be configured likewise. In alternative embodiments, the double walled tube may be substituted by a plurality of (parallel arranged) tubes. In the latter embodiments, as well as in the embodiment comprising the double walled tube, the tubular arrangement axis is especially configured parallel to the tube axis. In further embodiments, (especially comprising a plurality of tubes) the tubes may be arranged transverse with respect to the tubular arrangement axis. The tubes may partly curve around the tubular arrangement axis (see also below). Especially, (overall) a component of the tube axis (that is) arranged parallel to the tubular arrangement axis is larger than a component of the tube axis (that is) arranged perpendicular to the tubular arrangement.

Hence, in embodiments, the tubular arrangement axis may be arranged parallel to the tube axis (yet especially in agreement with a direction of flow through the tube). The tubular arrangement may be configured in a straight tubular arrangement. In embodiments, the tubular arrangement comprises a straight tubular arrangement, especially wherein a first component of the tube axis (that is) configured parallel to the tubular arrangement axis is larger than a second component of the tube axis (that is) configured perpendicular to the tubular arrangement.

In further embodiments, the tube may be bent, curved, or e.g. folded. Moreover, a direction of the (elongated) tube axis may change along a length of the tube. The flow direction along the tube may change correspondingly. The tube may e.g. be coiled. Such bends, curves, or folds may especially be configured to (locally) (substantially) not obstruct a possible fluid flow through the tube.

The tubular reactor may be spiraled. The tube may have a shape like a corkscrew. In further embodiments, the shape of the tubular reactor corresponds to a circular helix (having a constant radius with respect to the tubular arrangement axis). The tube may especially be coiled. The coiled tube may comprise a single turn or winding. The coil may in embodiments comprise less than a single turn. Yet, the coiled tube especially comprises a plurality of turns, windings.

The tube may e.g. comprise at least 10 windings or turns, especially at least 20 windings, such as at least 50 windings. In embodiments, the tube comprises 2-200, especially 5-100, even more especially 10-75 windings or turns. The windings or turns are especially (all) configured aligned with each other. As such, the coil or spiral may comprise a monolayer of windings or turns (especially with respect to the tubular arrangement axis). The windings or turns may in further embodiments define a face of the (coiled) tubular reactor (or the tubular arrangement. In further embodiments the windings or turns may define two opposite faces of the tubular reactor. The faces are especially configured in a radiation receiving relationship with the light sources.

It will be understood that intermediate configurations between substantially straight tubes and coiled tubes are also part of this invention. In embodiments, e.g., the tubular reactor comprises a (plurality of) coiled tube(s) comprising less than one turn, such as half of a turn or only a quarter of a turn. Such configurations may be comprised by the coiled tubular arrangement and/or the straight tubular arrangement.

In further specific embodiments, a distance between successive windings or turns of the spiral (coil) may be minimized. In embodiments, successive windings (turns) of the coil may be arranged contacting each other substantially along a complete winding (turn). The pitch of the spiral or coil may in embodiments substantially equal a characteristic outer size of the tube. In further embodiments, the pitch may be equal to or less than 10 times the outer size of the tube, such as equal to or less than 5 times the outer size of the tube. The pitch may in embodiment e.g. be substantially 2 times the characteristic outer size (especially leaving space for a further, especially parallel arranged, tube). Yet, the pitch may in embodiments be larger than 10, such as 50 or 100 times the characteristic outer size. The term "pitch" is known to the person skilled in the art and especially refers to a shortest distance between centers (tube axes) of two adjacent windings or turns.

The term "characteristic outer size" especially relates to a largest distance from a first location of the tube (reactor) wall to a second location of the tube (reactor) along a line perpendicular to the tube axis. For a circular tube, the outer size equals the outer diameter. For a square or rectangular tube, the outer size may refer to the outer height or outer width of the tube.

Hence, in embodiments, the tubular arrangement comprises a coiled arrangement. The tubular reactor is in specific embodiment configured in a coiled tubular arrangement. In a coiled tubular arrangement, the tubular arrangement axis may especially not be configured parallel to the tube axis. The tubular arrangement axis may in embodiments be arranged substantially transverse to the (elongated) tube axis. The (elongated) tube axis and the tubular arrangement axis may e.g. define an angle in the range of 45-135°, such as in the range of 60-120°, especially in the range of 80-100°, even more especially 90± 5°. The tubular reactor especially comprises a (coiled) tube. In specific embodiments, the tubular reactor is helically coiled.

In a specific embodiment, the invention provides a photoreactor assembly ("assembly") comprising a reactor, wherein the reactor is configured for hosting a fluid to be treated with light source radiation selected from one or more of UV radiation, visible radiation, and IR radiation, wherein the reactor comprises a reactor wall which is transmissive for the light source radiation, wherein (i) the reactor is a tubular reactor, and wherein the reactor wall defines the tubular reactor; (ii) the tubular reactor is configured in a coiled tubular arrangement (especially with an arrangement axis (A1)), especially wherein the tubular reactor is helically coiled; (iii) the photoreactor assembly further comprises a light source arrangement comprising a plurality of light sources configured to generate the light source radiation, wherein the reactor wall is configured in a radiation receiving relationship with the plurality of light sources; and especially (iv) one or more of the coiled tubular arrangement and the light source arrangement defines a polygon. Hence, in embodiments the reactor wall and the light source(s) may be radiationally coupled.

The tube is (at least partly) transmissive for the light source radiation and especially the radiation provided to the tube may pass the tube wall unhampered. In embodiments, the tube is made of glass. The tube may e.g. be made of quartz, borosilicate glass, soda-lime(-silica), high-silica high temperature glass, aluminosilicate glass, or soda-barium soft glass (or sodium barium glass) (PH160 glass). The glass may, e.g. marketed as Vycor, Corex, or Pyrex. The tube is in embodiments (at least partly) made of amorphous silica, for instance known as fused silica, fused quartz, quartz glass, or quartz. The tube may in further embodiments at least partly be made of a (transmissive) polymer. Suitable polymers are e.g. poly(methyl methacrylate) (PMMA), silicone/polysiloxane, polydimethylsiloxane (PDMS), perfluoroalkoxy alkanes (PFA), and fluorinated ethylene propylene (FEP). The tube may further comprise a transmissive ceramic material. Examples of transmissive ceramics are e.g. alumina Al₂O₃, yttria alumina garnet (YAG), and spinel, such as magnesium aluminate spinel (MgAl₂O₄) and aluminum oxynitride spinel (Al₂₃O₂₇N₅). In embodiment, e.g. the tube is (at least partly) made of one of these ceramics. In yet further embodiments, the tube may comprise (be made of) transmissive materials such as BaF₂, CaF₂ and MgF₂. The material of the tube may further be selected based on the fluid to be treated. The material may especially be selected for being inert for the (compounds in) the fluid.

Preferably, the light provided to the tube may penetrate substantially all fluid in the tube and the tube may especially have an inner characteristic size, such as a diameter or an inner width or height smaller than 10 mm, especially smaller than 8 mm, such as smaller than 5 mm. The characteristic size may in embodiments be at least 0.1 mm, such as 0.2 mm, especially at least 0.5 mm. Hence, in embodiments, the tube may comprise an inner cross-sectional area selected from the range of 0.01-80 mm², especially from the range of 0.45-2 mm².

Herein, the term polygon is used, especially in relation to different arrangements and shapes. A polygon is essentially a two-dimensional figure that is described by a finite number of straight line segments named edges or sides. Herein the term "polygon" may especially refer to a convex polygon. Further, the polygon especially comprises a regular polygon. Hence, the term "polygon" may especially refer to a convex regular polygon. The polygon may e.g. be a square, a pentagon, a hexagon, a heptagon, an octagon, a nonagon, a decagon, etc., etc. The polygon may in embodiments comprise an n-gon, especially wherein n is at least 3, such as at least 4. In embodiments n is equal to or smaller than 50, especially equal to or smaller than 20, such as equal to or smaller than 12, especially equal to or smaller than 10, such as 4≤*n*≤10. An *n*-gon comprises *n* edges or sides. Hence, the polygon(s) described herein may also especially comprise a number of edges equal to *n.*

Furthermore, phrases like "one or more of the elements define a polygon" may especially indicate that an outline, perimeter, contour or periphery of a cross section of the element defines the polygon, especially in a planar projection. The outline, perimeter, contour, or periphery not necessary comprises all straight edges. Especially, the polygon that substantially corresponds to the contours may be pictured around the element (defining the polygon). For instance, at least 90% of the area of the polygon may correspond to the respective cross section of the element. Furthermore, in embodiments, the edges of the polygon may be straight, however, the corners of the element may be rounded. Yet, in further embodiments the edges many be slightly curved.

The reactor, especially the tube, may in embodiments be configured self-standing. Additionally, or alternatively, the reactor, especially the tube, may be configured between (further) structural elements of the photoreactor assembly. The photoreactor assembly may further comprise a reactor support element ("support element") configured to support the reactor. In embodiments, the reactor support element may comprise a plurality of (light source) light transmissive panels enclosing the reactor (the tube). A (bent, curved, folded, etc.) tube may be configured between a set of such panels. The Light transmissive panel may e.g. comprise materials described in relation to the transmissive tube. In such embodiment, the cross section of the tube may have a more or less impressed or flattened shape. The reactor support element may in further embodiments comprise a support frame. The reactor support element may comprise one or more pillars (configured for supporting the reactor). In embodiments, the tubular reactor may be connected to one or more pillars. The tubular reactor may in further embodiments be coiled around one or more pillars (see below).

The term "thermally conductive element" may especially relate to any element that may conduct heat. The thermally conductive element especially comprises or is made of thermally conductive material. The thermally conductive material may e.g. have a thermal conductivity of at least 10 W/mK, such as at least 50 W/mK, especially at least 100 W/mK. The thermally conductive material may comprise a metal, such as copper, aluminum, steel, iron, silver, lead an alloy of one or more (of these) metals. The thermally conductive element may in embodiments comprise a layer or a coating arranged at or being part of the element comprising the thermally conductive element. In further embodiments, the element comprising the thermally conductive element may be configured thermally conductive, and especially may be made of the thermally conductive material. In further embodiments, the element comprising the thermally conductive element may function as a heat sink or heat spreader. In yet further embodiments, the thermally conductive element comprises a (dedicated) heatsink, e.g., comprising fins or other elements to increase a contact area between the heatsink and a cooling medium. The thermally conductive element may facilitate a transport of heat generated in the reactor assembly from relatively warmer to relatively cooler locations, and especially to a location external from the reactor assembly. In the reactor assembly, heat may be generated by the light sources and, e.g. be provided to the reactor, especially via irradiation. Heat may especially be transported via the thermally conductive elements away from the to light sources and the reactor to a cooling fluid (see below).

In embodiments, the reactor support element, especially the support body, at least partly, comprises (or is made of) thermally conductive material. In further embodiments (at least part of) the reactor support element, especially the support body, is transmissive for the light source radiation. In further embodiments, (at least part of) the reactor support element, especially the support body, may be reflective for the light source radiation. In particular, in embodiments, if the reactor is arranged at the same side of the reactor support element as the light sources, (at least part of) the reactor support element may be reflective. However, in further embodiments, if the reactor is arranged at another side of the reactor support element as the light sources, (at least part of) the reactor support element may be transmissive. For instance, a material may be reflective when at least 50% of the light under perpendicular irradiation is reflected (specular and/or diffuse).

Herein the term "reactor support element" may refer to a plurality of (different) reactor support elements. Likewise, the term "support body" may relate to more than one support body. The reactor support element essentially supports the (tubular) reactor and may prevent the reactor from collapsing. In specific embodiments, a plurality of tube windings or turns are configured around the tube support element. The tube may especially be helically coiled around (or within) the reactor support element.

The reactor support element may comprise a cylindrical support body. Such cylinder may facilitate winding of the tube around the support element. In further embodiments, the support body comprises an elongated body with a polygonal shape. The tubular reactor may especially be coiled around the elongated body with the polygonal shape. The elongated body with polygonal shape (support body) may in embodiments have rounded corners (see also above with respect to polygon). In further embodiments, the tube is configured loosely around the corners to avoid deformation and/or breaking of the tube.

The support element, especially the support body, may in embodiments define the (coiled) tubular arrangement.

The plurality of light sources may especially be configured for providing a high intensity light source radiation. In the light source radiations may further be configured for radiating (emitting) one or more of UV radiation, visible radiation, and IR radiation.

The term " UV radiation" is known to the person skilled in the art and relates to "ultraviolet radiation", or "ultraviolet emission", or "ultraviolet light", especially having one or more wavelengths in the range of about 10-400 nm, or 10-380 nm. In embodiments, UV radiation may especially have one or more wavelength in the range of about 100-400 nm, or 100-380 nm. Moreover, the term "UV radiation" and similar terms may also refer to one or more of UVA, UVB, and UVC radiation. UVA radiation may especially refer to having one or more wavelength in the range of about 315-400 nm. UVB radiation may especially refer to having one or more wavelength in the range of about 280-315 nm. UVC radiation may further especially have one or more wavelength in the range of about 100-280 nm.

The terms "visible", "visible light", "visible emission", or "visible radiation" and similar terms refer to light having one or more wavelengths in the range of about 380-780 nm.

The term "IR radiation" especially relates to "infrared radiation", " infrared emission", or "infrared light", especially having one or more wavelengths in the range of 780 nm to 1 mm. Moreover, the term "IR radiation" and similar terms may also refer to one or more of NIR, SWIR, MWIR, LWIR, FIR radiation. NIR may especially relate to Near-Infrared radiation having one or more wavelength in the range of about 750-1400 nm. SWIR may especially relate to Short-wavelength infrared having one or more wavelength in the range of about 1400-3000 nm. MWIR may especially relate to Mid-wavelength infrared having one or more wavelength in the range of about 3000-8000 nm. LWIR may especially relate to Long-wavelength infrared having one or more wavelength in the range of about 8-15 µm. FIR may especially relate to Far infrared having one or more wavelength in the range of about 15-1000 µm.

In embodiments (at least part of) the plurality of light sources comprise Light emitting diodes (LEDs), especially an array of Light emitting diodes. The term "array" may especially refer to a plurality of (different) arrays. In further embodiments (at least part of) the plurality of light source comprise Chips-on-Board light sources (COB). The term "COB" especially refers to LED chips in the form of a semiconductor chip that is neither encased nor connected but directly mounted onto a substrate, such as a Printed Circuit Board. The COB and/or LED may in embodiments comprise a direct LED (with dominant wavelengths ranging for instance from UVC to IR wavelengths) In further embodiments, the COB and/or LED comprises one or more phosphor-converted LEDs. Using such light sources, high intensity radiations (light) may be provided per light source or per light source element (see below). In embodiments, e.g., the light sources may provide 100-25,000 lumen (visible light) per light source. In embodiments, the light sources may e.g. apply (consume) 0.5-500 (electrical) Watts per light source (input power).

The plurality of light sources is configured for providing the light source radiation to the fluid in the reactor during operations. In specific embodiments, the light source arrangement is configured in correspondence with the tubular arrangement. The light source arrangement may especially (also) have a rotational symmetry. The light source arrangement may in embodiments define a circle or e.g. an ellipse. In further embodiments, the light source arrangement may define a polygon. In further embodiments, the (coiled) tubular arrangement and the light source arrangement both define polygons, especially having mutually parallel configured polygon edges. The polygons may in embodiments each comprise 3-16, especially 4-10 polygon edges.

The light source arrangement may especially have a light arrangement axis, configured parallel to the tubular arrangement axis.

The plurality of light sources may be configured enclosing the tubular arrangement (and as such may all face in a direction of the tubular arrangement axis). In further embodiments, the plurality of light sources are enclosed by the tubular arrangement (and may all face away from the tubular arrangement axis). Yet, in further embodiments, a part of the light sources enclose the tubular arrangement and another part is enclosed by the tubular arrangement. Hence, in embodiments at least a first subset of the plurality of light sources enclose the (coiled) tubular arrangement. Additionally, or alternatively at least a second subset of the plurality of light sources are enclosed by the (coiled) tubular arrangement.

In specific embodiments, a first subset of the plurality of light sources enclose the (coiled) tubular arrangement, thereby defining an outer light source polygon, and especially a second subset of the plurality of light sources are enclosed by the (coiled) tubular arrangement, thereby defining an inner light source polygon.

In specific embodiments, the photoreactor assembly further comprises a light escape face arrangement comprising light escape faces of the plurality of light sources, especially wherein each light escape face is perpendicular to an optical axis of the respective light source. In further embodiments, the (coiled) tubular arrangement defines a first polygon and the light escape face arrangement defines a second polygon, especially wherein each polygon edge of the first polygon is configured parallel to a corresponding polygon edge of the second polygon. Especially, the first polygon and the second polygon are (substantially) similar.

In yet further embodiments, the light escape face arrangement defines (i) an inner second polygon enclosed by the first polygon and (ii) an outer second polygon, enclosing the first polygon, and especially each polygon edge of the first polygon is configured parallel to a corresponding polygon edge of the inner second polygon and (configured parallel) to a corresponding polygon edge of the outer second polygon.

In embodiments, the number of edges of the polygon equals (a total) number of light source elements. Yet, in further embodiments, the number of edges may be equal to twice the (total) the number of edges. For instance in embodiments, wherein the light sources are configured to generate the light source radiation in a single one of the directions selected from the direction towards the tubular arrangement axis and the direction away from the tubular arrangement axis the number of edges may equal the number of light source elements. The number of edges times two may especially equal the number of light source elements in embodiments wherein the light sources are configured to generate the light source radiation in the direction of the tubular arrangement axis as well as in the direction away from the tubular arrangement.

The light source element may especially comprise a flat (reflective) face. Yet in other embodiments, the face may be curved. The light source elements may especially be rectangular. In further embodiments, the light source elements are arranged at an angle with each other. In embodiments, (at least part of) the light source elements are physically connected to each other, for instance in a light source unit. Yet, in other embodiments, the light source elements are single elements, and, especially when configured in the photoreactor assembly, together define the light source unit.

In specific embodiments, the light source elements (together) define a polygon having the same symmetry as the polygon defined by one or more of the tubular arrangement and the light source arrangement.

The light source elements and/or the light source unit may in specific embodiments be configured exchangeable with other light source elements / light source units, e.g. if another wavelength of the light source radiation is required (or e.g. to replace the light source).

Hence, in further embodiments the photoreactor assembly further comprises light source element receiving elements, wherein the light source element receiving elements are configured to removably house the light source elements. Likewise, the photoreactor assembly may (also) comprise a light source unit receiving unit, wherein the light source unit receiving unit is configured to removably house the light source unit.

As discussed above, during operations heat may be produced by the light sources and heat may be provided to the reactor. To improve the efficiency, at least parts of the photoreactor assembly may be cooled. Herein the term "cooling" may relate to passive cooling and/or active cooling. The photoreactor assembly may (further) comprise a cooling element (for active and/or passive cooling). The cooling element may in embodiments comprise a (cooling) fluid transport channel. In further embodiments, the cooling element may (also) comprise a thermally conductive element. The cooling element may especially be configured for cooling the reactor and/or a light source. Hence, the cooling element is especially configured in thermal contact with the reactor and/or one or more of the plurality of light sources.

The terms "cooling element", "fluid transport channel" and "thermally conductive element" may especially relate to a plurality of cooling elements, fluid transport channels and thermally conductive elements, respectively.

Hence, in further embodiments, the photoreactor assembly comprises one or more cooling elements, wherein the one or more cooling elements comprise one or more of (i) one or more (cooling) fluid transport channels and/or (ii) one or more thermally conductive elements, especially wherein the one or more cooling elements are in thermal contact with one or more of (a) the reactor and (b) one or more of the light sources. In embodiments, one or more fluid transport channels are configured in functional contact, especially thermal contact, with one or more of the thermally conductive elements.

In further embodiments, the tubular reactor and the light source elements may define one or more (cooling) fluid transport channels between the tubular reactor and (the faces of) the light source elements. In such embodiment, especially a fluid transport channel width (d4) may be defined by a minimal distance between the tubular reactor and the light source elements. The fluid transport channel width may typically be less than 4 cm, especially less than 2 cm, such as less than 1 cm, such as equal to or less than 5 mm. The transport channel width may be at least 0.2 mm, such as at least 0.5 mm, especially at least 1 mm, or even at least 2 mm. In embodiments the fluid transport channel width (d4) is selected from the range of 0.2-40 mm, such as 0.5-20 mm, especially 0.5-10 mm, or 1-5 mm. In further embodiments, (see before) the support body may be comprising one or more (cooling) fluid transport channels. In such embodiment, especially the fluid transport channel width (d4) may be defined by a (internal) diameter or width of the channel. As such, the fluid transport channel width may in embodiments (also) be in the range of 0.5-10 cm, such as 5-10 cm or, e.g., 0.5-2 cm.

In embodiments, the thermally conductive element comprises a heat sink, especially comprising one or more fins (or ribs). In embodiments, the reactor support element, especially the reactor support body, comprises fins. In further specific elements, the light source element may comprise a heat sink. The light source may in embodiments be connected to, especially mounted at, the heat sink. The heat sink may have a reflective surface providing the face of the light source element. A thermally conductive element such as heat sink may be passively cooled. Yet, in embodiments, a cooling fluid may be forced along the thermally conductive element to actively cool it. The cooling fluid may additionally or alternatively be forced through a cooling fluid transport channel configured in the thermally conductive element (to actively cool it).

In a further aspect, the invention provides a method for treating a fluid with light source radiation. The method especially comprises (i) providing the photoreactor assembly according to the invention; (ii) providing the fluid to be treated with the light source radiation in the reactor; and (iii) (providing light source radiation to the reactor and) irradiating the fluid with the light source radiation. Especially, the fluid to be treated is a liquid.

Irradiating the fluid with the light source radiation may induce the photochemical reaction. In embodiment, the (photochemical) reaction comprises a photocatalytic reaction. In embodiments, the method further comprises providing a photocatalyst and/or photosensitizer to the fluid prior to and/or during irradiating the fluid with the light source radiation.

In embodiments, the method may comprise transporting the fluid through the reactor while irradiating the fluid with the light source radiation, and transporting a cooling fluid through the one or more fluid transport channels (of the photoreactor assembly).

In embodiments, the method may comprise a batch process. In other embodiments, the method comprises a continuous process. Hence, in specific embodiments, the method comprises transporting the fluid through the reactor while irradiating the fluid with the light source radiation.

In further embodiments (the photoreactor assembly comprises one or more cooling elements (described herein) and), the method further comprises transporting a cooling fluid through and/or along one or more cooling elements.

In yet further embodiments, the method comprises selecting the light source radiation from one or more of UV radiation, visible radiation, and IR radiation, prior to irradiating the fluid with the light source radiation. The light source radiation may especially be selected by selecting the plurality of light sources to generate the (selected) light source radiation. The light source radiation may further be selected based on the fluid to be treated, especially a (photosensitive) reactant and/or photocatalyst and/or photosensitizer in the fluid.

The terms "upstream" and "downstream" relate to an arrangement of items or features relative to the propagation of the light from a light generating means (here the especially the light source), wherein relative to a first position within a beam of light from the light generating means, a second position in the beam of light closer to the light generating means is "upstream", and a third position within the beam of light further away from the light generating means is "downstream".

The term "light source" may refer to a semiconductor light-emitting device, such as a light emitting diode (LEDs), a resonant cavity light emitting diode (RCLED), a vertical cavity laser diode (VCSELs), an edge emitting laser, etc. The term "light source" may also refer to an organic light-emitting diode, such as a passive-matrix (PMOLED) or an active-matrix (AMOLED). In a specific embodiment, the light source comprises a solid-state light source (such as a LED or laser diode). In an embodiment, the light source comprises a LED (light emitting diode). The term LED may also refer to a plurality of LEDs. Further, the term "light source" may in embodiments also refer to a so-called chips-on-board (COB) light source. The term "COB" especially refers to LED chips in the form of a semiconductor chip that is neither encased nor connected but directly mounted onto a substrate, such as a PCB and/or a heat sink Hence, a plurality of semiconductor light sources may be configured on the same substrate. In embodiments, a COB is a multi LED chip configured together as a single lighting module. The term "light source" may also relate to a plurality of (essentially identical (or different)) light sources, such as 2-2000 solid state light sources. In embodiments, the light source may comprise one or more micro-optical elements (array of micro lenses) downstream of a single solid state light source, such as a LED, or downstream of a plurality of solid state light sources (i.e. e.g. shared by multiple LEDs). In embodiments, the light source may comprise a LED with on-chip optics. In embodiments, the light source comprises a pixelated single LEDs (with or without optics) (offering in embodiments on-chip beam steering).

The phrases "different light sources" or "a plurality of different light sources", and similar phrases, may in embodiments refer to a plurality of solid-state light sources selected from at least two different bins. Likewise, the phrases "identical light sources" or "a plurality of same light sources", and similar phrases, may in embodiments refer to a plurality of solid state light sources selected from the same bin.

Hence, amongst others the invention provides a flow reactor for photochemical processes, especially a polygonal flow reactor for photochemical processes.

The photoreactor assembly may comprise or may be functionally coupled to a control system. The control system may, especially in an operational mode, be configured to control one or more of the light sources. alternatively or additionally, the control system may, especially in an operational mode, be configured to control the cooling system. Alternatively or additionally, the control system may, especially in an operational mode, be configured to control the fluid transporting device. Further, alternatively or additionally the control system may, especially in an operational mode, be configured to control a flow of a fluid through the reactor.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1A-1C depict some embodiments of the photoreactor assembly;
Fig. 2A-2B depict some further embodiments of the photoreactor assembly;
Fig. 3A, 3B and 4 depict some further features of the photoreactor assembly;
Fig. 5 depicts features of the cooling system; and
Fig. 6 depicts further features of the photoreactor assembly;
Fig. 7A-C schematically depict further features of embodiments of the photoreactor assembly;
Fig. 8A-B schematically depict further features of embodiments of the photoreactor assembly;
Fig. 9 schematically depicts an embodiment of the photoreactor assembly;
Fig. 10 schematically depicts an embodiment of the photoreactor assembly.
The schematic drawings are not necessarily drawn to scale.

### DETAILED DESCRIPTION OF THE EMBODIMENTS

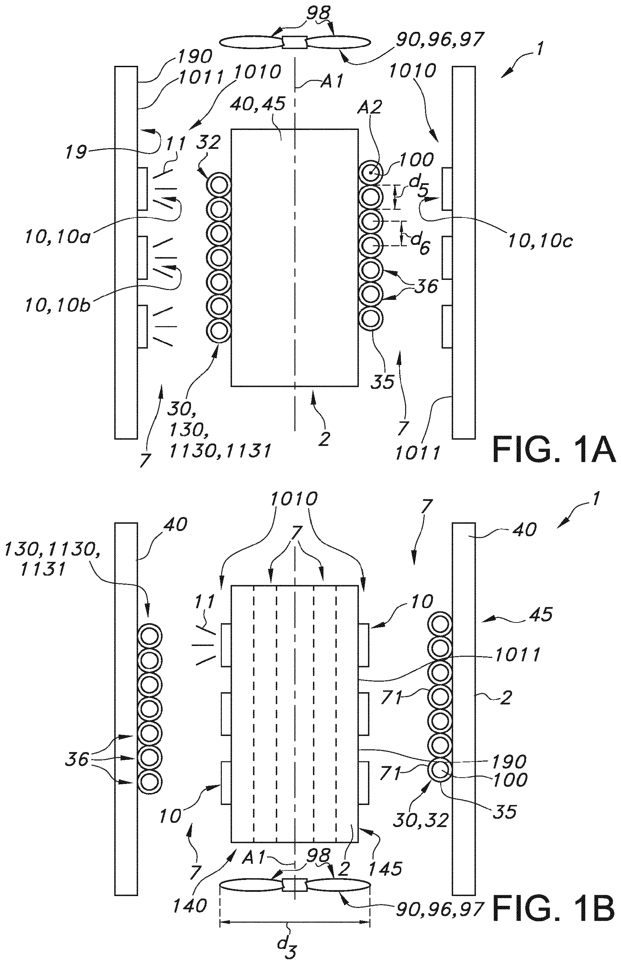

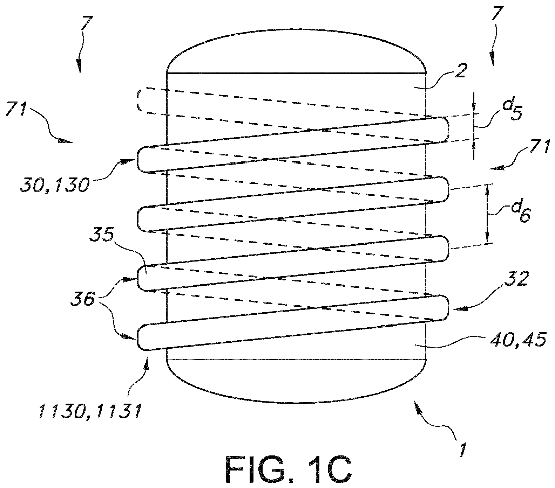

Figs. 1A, 1B, and 1C schematically depict embodiments of the photoreactor assembly 1. The photoreactor assembly 1 may comprise a reactor 30, especially wherein the reactor 30 is configured for hosting a fluid 100 to be treated with light source radiation 11. The light source radiation 11 may be selected from one or more of UV radiation, visible radiation, and IR radiation. The reactor 30 may comprise a reactor wall 35 which is transmissive for the light source radiation 11. In embodiments, the photoreactor assembly 1 may further comprise a light source arrangement 1010 comprising a plurality of light sources 10 configured to generate the light source radiation 11. In particular, the reactor wall 35 may be configured in a radiation receiving relationship with the plurality of light sources 10. In further embodiments, the photoreactor assembly 1 may further comprise one or more fluid transport channels 7 configured in functional contact, especially thermal contact, with one or more of (i) the reactor 30 and (ii) one or more of the plurality of light sources 10. In Fig. 1A, the depicted fluid transport channels 7 are configured in functional contact with both the reactor 30 and the plurality of light sources 10. In Fig. 1B, part of the depicted fluid transport channels 7 are configured in functional contact with both the reactor 30 and the plurality of light sources 10, and part of the depicted fluid transport channels 7 are arranged within a light source support body 145 of a light source support element 140 and are configured in functional contact with the plurality of light sources 10. In further embodiments, the photoreactor assembly 1 may comprise a cooling system 90 configured to transport a cooling fluid 91 through the one or more fluid transport channels 7.

In embodiments, the light source support element 140 may be configured to support the plurality of light sources 10. In further embodiments, the light source support element 140 comprises a light source support body 145, especially wherein the plurality of light sources are configured in functional contact, especially thermal contact, with the light source support body 145. The light source support body 145 may especially comprise one or more of the one or more fluid transport channels 7.

The photoreactor assembly 1 comprises a reactor 30 for hosting a fluid 100 to be treated with light source radiation 11. The light source radiation 11 may especially be selected from the group of UV radiation, visible radiation, and IR radiation. The light sources 10 may in embodiments comprise chips-on-board light sources (COB) and/or an array of light emitting diodes (LEDs). The reactor 30 comprises a reactor wall 35 which is at least partly transmissive for the light source radiation 11. The reactor wall 35 may define the reactor 30. In the depicted embodiment the reactor 30 comprises a tubular reactor 130, especially configured in a tubular arrangement 1130.

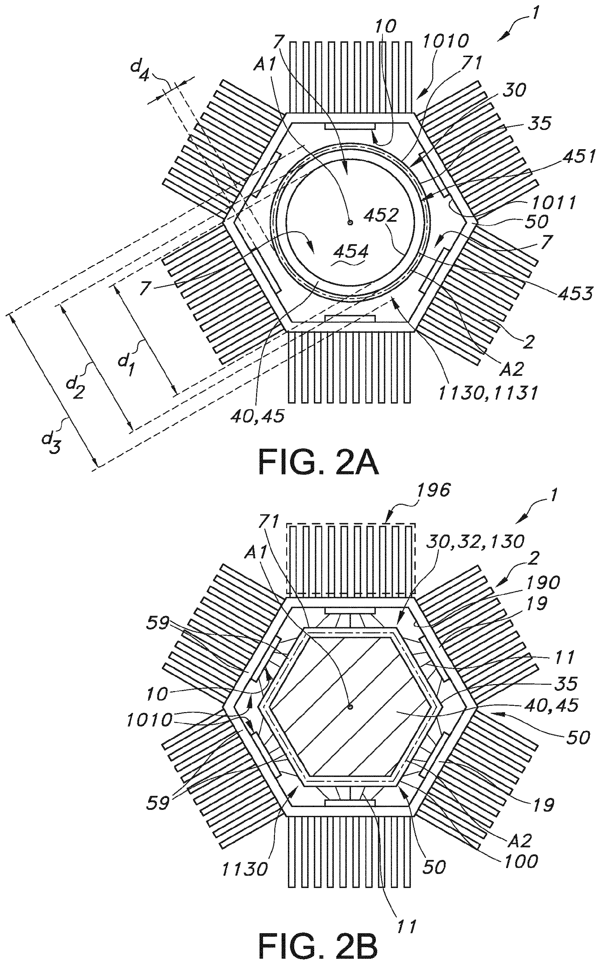

In the embodiment the tubular arrangement 1130 is pictured as a coiled tubular arrangement 1131 (see also Figs. 2 showing a top view of a tubular reactor 130 configured in a coiled tubular arrangement 1131). The coiled tubular arrangement 1131 is schematically depicted by the seven windings 36 or turns 36 of the tubular reactor 130 (the turns 36 continue from the left hand side to the right hand side). Figs. 1A-B further illustrate that the tubular reactor 130 is helically coiled. Hence, the tubular reactor 130 may comprise a tube 32, especially a tube 32 coiled in a plurality of windings 36, such as coiled around a reactor support element 40, especially around a support body 45, in a plurality of windings 36.

The photoreactor assembly 1 further comprises a light source arrangement 1010 comprising a plurality of light sources 10 for generating the light source radiation 11. The reactor wall 35 is especially configured in a radiation receiving relationship with the plurality of light sources 10.

Especially, one or more of the tubular arrangement 1130 and the light source arrangement 1010 defines a polygon 50. This is further depicted in Figs. 2A and 2B, wherein in the embodiment of Fig. 2A, the light source arrangement 1010 defines the polygon 50, especially a hexagon, and in the embodiment of Fig. 2B, both the light source arrangement 1010 and the tubular arrangement 1130 define the polygon 50. The embodiment of Fig. 2B is an example of an embodiment wherein the tubular arrangement 1130 and the light source arrangement 1010 both define polygons 50 having mutually parallel configured polygon edges 59. The polygons 50 are hexagons and each polygon 50 comprises six polygon edges 59.

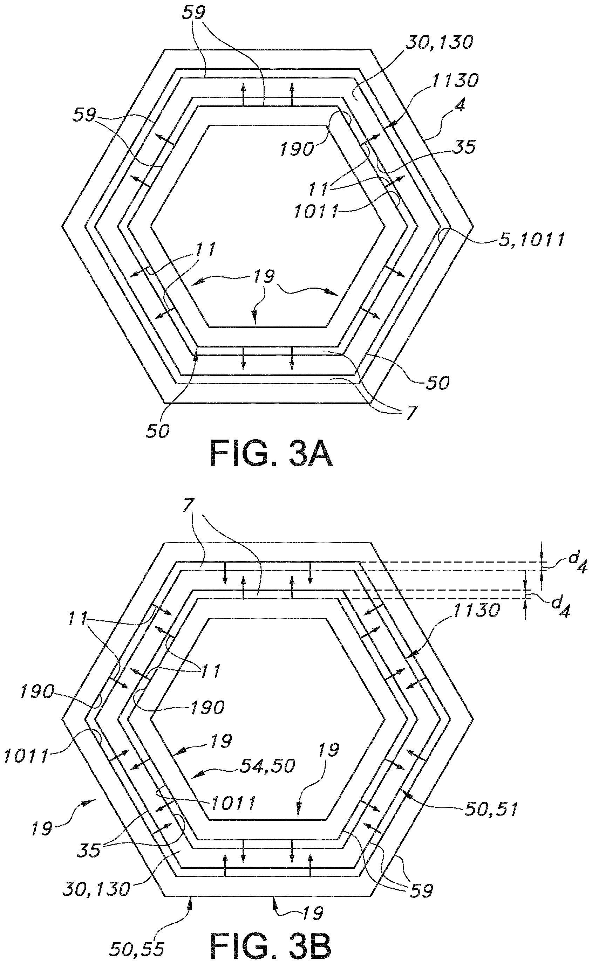

In the embodiment depicted in Fig. 1A, (all of) the plurality of light sources 10 enclose the tubular arrangement 1130. In the embodiment depicted in Fig. 1B (all of) the plurality of light sources 10 are enclosed by the tubular arrangement 1130. Yet, in other embodiments, a first subset of the plurality of light sources 10 encloses the tubular arrangement 1130 and a second subset of the plurality of light sources 10 is enclosed by the tubular arrangement 1130. This is very schematically depicted in Fig. 3B, although the light sources 10 are not shown in the figure. Yet the light source radiation 11 is indicated.

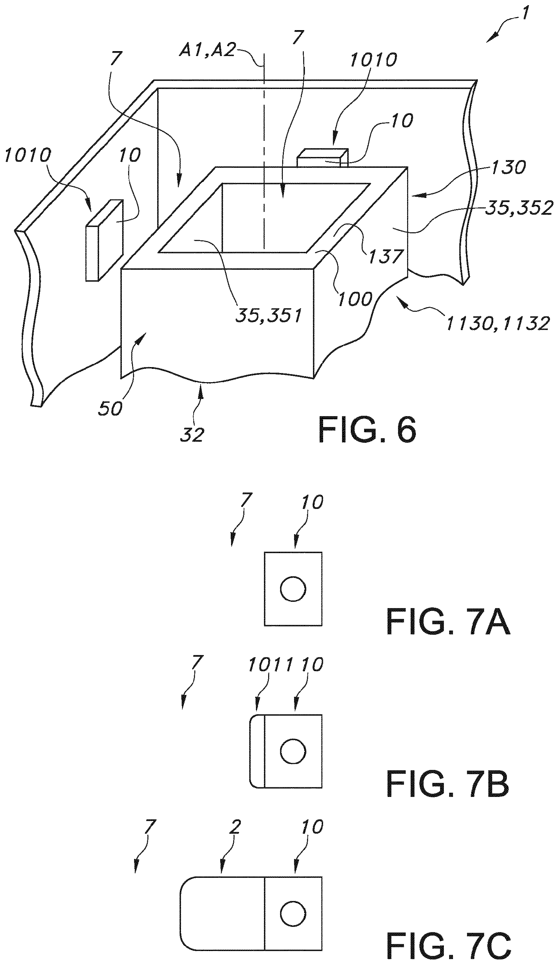

Fig. 1A further depicts an embodiment wherein successive windings (turns) of the tubular reactor 130 may be arranged contacting each other substantially along a complete winding 36 (turn 36). The pitch d6 of the tubular reactor 130 may substantially equal a characteristic outer size d5 of the tube 32. In further embodiments (also see Fig. 7), the pitch d6 may be equal to or less than 10 times the outer size of the tube 32, such as equal to or less than 5 times the outer size of the tube 32. The pitch d6 may in embodiments e.g. be substantially 2 times the characteristic outer size d5 (especially leaving space for a further, especially parallel arranged, tube). Yet, the pitch d6 may in embodiments be larger than 10, such as 50 or 100 times the characteristic outer size d5.

Fig. 1A further schematically depicts an embodiment wherein two or more of the plurality of light sources 10, 10a, 10b, 10c provide light source radiation 11 having different spectral power distributions, *i.e.,* for example, a first light source 10, 10a may provide light source radiation 11 having a different spectral power distribution from the light source radiation 11 provided by a second light source 10, 10b. For instance, a first light source 10, 10a may be configured to generate UV radiation and a second light source 10, 10b may be configured to generate visible radiation. In specific embodiments, the photoreactor assembly 1 may comprise two or more such light sources 10,10a,10b configured at different positions along an arrangement axis A1. The arrangement axis may e.g. be a length axis, or an axis of symmetry relative to the reactor. Hence, e.g. at different heights, different types of light sources 10 may be provided. In further embodiments, the photoreactor assembly may comprise two or more such light sources 10,10a,10c configured at different sides of the reactor, especially at the same position with respect to the arrangement axis A1 (e.g., at the same height). Hence, at different sides of the reactor, different types of light sources 10 may be provided.

However, Fig. 1A further schematically depicts in fact also an embodiment wherein two or more of the plurality of light sources 10, 10a, 10b, 10c provide light source radiation 11 having identical spectral power distributions. Hence, different options are possible.

Fig. 1B further depicts an embodiment wherein one or more of the plurality of light sources 10, especially all (depicted) light sources, are at least partly configured within at least one of the one or more fluid transport channels 7. Further, Fig. 1B schematically depicts that at least part of the reactor wall 35 is configured within at least one of the one or more fluid transport channels 7, and that at least part of the reactor wall 35 defines part of a channel wall 71 of at least one of the one or more fluid transport channels 7.

Fig. 1C schematically depicts a side view of an embodiment of a reactor 30. In the depicted embodiment, the reactor 30 is a tubular reactor 130, wherein the tube 32 is coiled around a reactor support element 40, especially the support body 45, in a plurality of windings 36. In the depicted embodiment, the successive windings are spaced apart, *i.e.,* the pitch d6 of the tubular reactor 130 is larger than the characteristic outer size d5 of the tube 32, such as 2^{∗}d5 ≤ d6 ≤ 3^{∗}d5.

Further, in the depicted embodiment, the reactor wall 35 defines part of a channel wall 71 of at least one of the one or more fluid transport channels 7.

In the depicted embodiment, the cooling system 90 comprises a fluid transporting device, especially a gas transporting device 96 selected from the group consisting of an air blower, an air sucker, and a fan 97. Hence, in embodiments, the fluid transporting device, especially the gas transporting device, may be configured to blow air (towards the reactor 30) or to suck air (from the reactor 30). The gas transporting device may be arranged above and/or below the reactor, i.e., in embodiments, the gas transporting device 96 may be arranged on a top section of the photoreactor assembly 1, and in further embodiments the gas transporting device 96 may be arranged on a bottom section of the photoreactor assembly 1.

The embodiments depicted in Figs. 1 and 2 further comprise a reactor support element 40 to support the reactor 30. The reactor support element 40 comprises a support body 45, which is for the four depicted embodiments rotational symmetrical (around the (reactor) arrangement axis A1. In the embodiments, at least part of the reactor 30 is configured in functional contact, especially thermal contact, with the support body 45. Such configuration may facilitate dissipation of heat from the tubular reactor 130 to the support body 45, especially if the support body 45 comprises a thermally conductive element 2 or is thermally connected to such thermally conductive elements 2. The thermally conductive element 2 may comprise a heat sink, optionally comprising fins. Such heat sinks (thermally conductive elements 2) are e.g. schematically indicated in Figs. 2 in thermal contact with the light sources 10. In embodiments, the support body 45 may comprise one or more of the one or more fluid transport channels 7.

Figs. 1 and 2, further depict that the arrangement axis A1 and the tube axis A2 are configured almost perpendicular to each other.

Fig. 2A further schematically depicts an embodiment of the photoreactor assembly 1, wherein the support body 45 comprises a hollow (tubular) body, wherein the hollow body comprises a support body wall 451, wherein the support body wall 451 comprises an inner support body face 452 and an outer support body face 453.

In the depicted embodiment, the inner support body face 452 defines at least one of the one or more fluid transport channels 7. Further, in the depicted embodiment, the reactor 30 is configured at the side of the outer support body face 453. In alternative embodiments, the reactor may be configured at the side of the inner support body face 452, especially wherein the reactor defines an (inner) fluid transport channel (7).

Hence, in the depicted embodiment, the inner support body face 452 defines a support body space 454, wherein 30-100 vol.%, especially 50-99 vol.%, of the support body space 454 is defined by a fluid transport channel 7. In the depicted embodiment, the support body space 454 may be essentially an open ("hollow") space. However, in alternative embodiments, the support body space 454 may be partially filled with a filler material, such as filled with a thermally conductive material, especially wherein the filler material defines a plurality of fluid transport channels 7.

The support body wall 451 may have a circular cross-section, especially wherein the inner support body face 452 and the outer support body face 453 define diameters d1,d2, respectively, especially wherein 0.65^{∗}d2≤d1≤0.9^{∗}d2. Particularly good results may have been obtained with diameter ratios selected from such range.

In the depicted embodiment, the fan 97 (not depicted for visualizational purposes) comprises ventilator blades 98, wherein the ventilator blades 98 define a blade diameter d3, wherein d3>d2.

Fig. 2B further schematically depicts an embodiment, wherein the photoreactor assembly 1 comprises a plurality of light source elements 19, wherein each light source element 19 comprises one or more of the plurality of light sources 10, and wherein each of the light source elements 19 comprises at least one thermally conductive element 2 configured in functional contact with the one or more of the plurality of light sources 10, especially wherein the light source element 19 further comprises a reflective element 1011 at a surface 190 of the light source element 19 facing the reactor wall 35. The reflective element 1011 may especially be reflective for the light source radiation 11. In the depicted embodiment, the photoreactor assembly 1 further comprises a second fluid transporting device 196 configured to transport a cooling fluid 91 along one or more of the thermally conductive elements 2 configured in functional contact with one or more of the plurality of light sources 10. For visualizational purposes, a single second fluid transporting device 196 is depicted. However, in further embodiments, each light source element 19 may be functionally coupled with a (respective) second fluid transporting device 196. A single second fluid transporting device 196 may also be functionally coupled with a plurality of light source elements 19.

In Figs. 3A and 3B, some further features of embodiments of the assembly 1 are depicted. The figures schematically depict the photoreactor assembly 1 comprising a number of light source elements 19. In Fig. 3A the photoreactor assembly 1 comprises six light source elements 19. In Fig. 3B the photoreactor assembly 1 comprises twelve light source elements 19. Each light source element 19 comprises one or more light sources 10. The light source element 19 may further comprise at least one thermally conductive element 2 configured in thermal contact with the light source 10 (as is depicted in e.g. Fig. 2B). The light source element 19 may further comprise a reflective element 1011 (reflective for the light source radiation 11) at a surface 190 of the light source element 19 facing the reactor wall 35.

In the embodiment in Fig. 3A, the light sources 10 are enclosed by the tubular arrangement 1130. In the figure, the light sources 10 are not shown, yet may be understood from the arrows depicting the light source radiation 11. To prevent light source radiation 11 from escaping from the photoreactor assembly 1, the embodiment of Fig. 3A (also) comprises a wall 4 with a reflective element 1011, especially a reflective surface 5 (facing the tubular reactor 130) enclosing the tubular reactor 130 and the light sources 10. The reflective element 1011/reflective surface 5 is especially reflective for the light source radiation 11. The reflective element 1010/surface 5 may reflect back any radiation that is not absorbed by the fluid. This may further provide an improved light homogeneity over the fluid 100.

In the embodiment of Fig. 3B, the first subset of the plurality of light sources 10 (as indicated by the arrows depicting light source light 11) enclose the tubular arrangement 1130 and the second subset of the light sources 10 are enclosed by the tubular arrangement 1130. In the embodiment, the first subset of the plurality of light sources 10 defines an outer light source polygon 50,55 and the second subset of the plurality of light sources 10 defines an inner light source polygon 50,54. The tubular arrangement 1130 defines yet a further polygon 50,51. Also in this embodiment, the tubular arrangement 1130 and the light source arrangement 1010 (comprising the two subsets of light sources 10) both define polygons 50, 51, 54, 55 having mutually parallel configured polygon edges 59.

Fig. 3B further schematically depicts an embodiment wherein the reactor 30, especially the tubular reactor, and the light source elements 19 define one or more fluid transport channels 7 between the photoreactor 30 and the light source elements 19. In particular, in the depicted embodiment, two annular fluid transport channels 7 are defined between the reactor 30 and the light source elements 19. In embodiments, a (minimal) distance between the reactor 30 and the light source elements 19 may define a fluid transport channel width (d4), wherein the fluid transport channel width (d4) is selected from the range of 1-5 mm. In the depicted embodiment, the two fluid transport channels 7 are depicted with an equal and constant fluid transport width (d4). However, in further embodiments, the fluid transport width (d4) may also be different for the two different fluid transport channels 7 and/or may vary along the fluid transport channels 7.

The photoreactor assembly 1 may especially comprise one or more cooling elements 95, e.g., comprising one or more fluid transport channels 7 and/or one or more thermally conductive elements 2. In Fig. 3A and Fig. 3B, fluid transport channels 7 between the tubular reactor 130 and the light source elements 19 are defined by the tubular reactor 130 and the light source elements 19. Furthermore, between the wall 4 and the tubular reactor 130 (also) a fluid transport channel 7 may be defined. Comparable fluid transport channels 7 are depicted in the embodiments of Figs. 1 and 2. The fluid transport channel may have a width d4, e.g. in the range of 1-5 mm. Yet, in embodiments, see e.g. Fig. 2A wherein a (straight) fluid transport channel 7 is (also) configured, especially as a through opening, in the support body 45, the width d4 may be larger than 5 cm. In further embodiments, fluid channels 7 may be defined in any of the thermally conductive elements 2, especially having a width d4 that may be smaller than 5 cm, and e.g. larger than 0.5 cm. For instance in embodiments, a fluid transport channel 7 may be defined in the support body 45 starting at a first side of the body and ending at the same side of the body 45. The fluid transport channels 7 may be used for cooling. In Figs. 1-3, the channels 7 are all in thermal contact with the reactor 30 while most of them are also in thermal contact with the light sources 10.

Hence, the reactor support element 40, especially the support body 45, may especially be solid or hollow, especially comprising a cavity and/or a fluid transport channel 7. The reactor support element 40, especially the support body 45, may further comprise a heatsink, especially comprising fins. In embodiments, the reactor support element 40, especially the support body 45, is finned. The reactor support element 40, especially the support body 45, may thus be configured for facilitating a flow of a cooling fluid 91 (e.g. air 91,92 and/or water 91,93 or another cooling liquid 91,93) through and/or along the reactor support element 40.

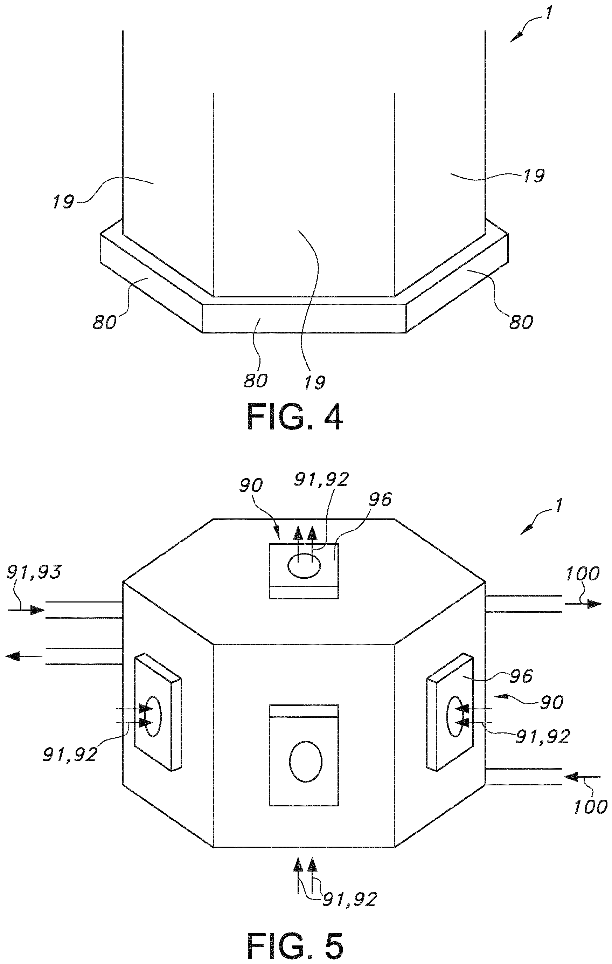

Elements of the cooling system 90 are further depicted in Fig. 5. The cooling system may comprise the cooling elements 95. The cooling system 90 is especially configured for transporting the cooling fluid 91 through and/or along one or more of the one or more cooling elements 95 (especially fluid transport channels 7 and/or thermally conductive elements 2). The cooling system may e.g. comprise a gas transporting device 96 for transporting a gaseous fluid 91,92, especially air 91,92 through one or more of the fluid transport channels 7 and along one or more the thermally conductive elements 2. Additionally or alternatively a liquid (cooling) fluid, 91, 93 may be used, and the cooling system may comprise a pump for transporting the liquid cooling fluid 91,93. In the embodiments of Fig. 5, for instance, the photoreactor assembly 1 comprises gas transporting devices 96, such as fans, configured for transporting air along thermally conductive elements 2 in thermal connection with the light sources 10, such as heat sinks of the light source element 19. Further a pump may be arranged to pump a liquid cooling fluid 91,93 through e.g. some of the fluid transport channels 7. In the embodiment also air 91,92 is transported through one or more of the fluid transport channels 7 via a fan 90,96,97 arranged at the top of the photoreactor assembly 1.

The light source elements 19 are in embodiments removably housed in the photoreactor assembly 1. The photoreactor assembly 1 may e.g. comprise light source element receiving elements 80 configured for removably housing the light source elements 19, as is very schematically depicted in Fig. 4. In embodiments, every single light source element 19 may be removed separately. Yet, in further embodiments, (at least part of) the light source elements 19 together form a light source unit, and the light source unit(s) may be removably housed in the light source element receiving elements 80. The light source element receiving elements 80 may therefore also define a light source unit receiving unit (for removably housing the light source unit).

In Fig. 6, features of a further embodiment of the photoreactor assembly 1 are depicted. In this embodiment, the reactor wall 35 of the tubular reactor 130 comprises an inner reactor wall 351 and an outer reactor wall 352 together defining the tubular reactor 130. Hence, in embodiments, the tube 32 may (also) have an inner wall 351 and an outer wall 352. Herein, such configuration is also called a double walled tube 32. Depending on the configuration of the light source arrangement 1010 (not depicted in the figure) the inner reactor wall 351, the outer reactor wall 352 or both walls 351, 352 are configured at least partly transmissive for the light source radiation 11. In this embodiment, the tubular arrangement define the polygon 50 (a square). In the embodiment, the fluid 100 may flow in the channel configured between the inner wall 351 and the outer wall 352. Herein such channel is also referred to as (square) annulus 137. As an alternative of the depicted embodiment, the tubular reactor 130 may also be defined by a plurality parallel tubes 32, together defining the reactor 30 (not depicted). The tube axis A2 of the plurality of tubes 32 (as well as the tube axis of the double walled tube 32) may especially also be configured parallel to the arrangement axis A1. Yet, in embodiments, the plurality of tubes 32 in such embodiment may be configured at an angle with respect to the arrangement axis A1. Such angle is especially an acute angle. Herein, the tubular arrangement 1130 of the double walled tube 32 or the (alternative) one described above comprising the plurality of tubes 32 is also named a straight tubular arrangement 1132.

The photoreactor assembly 1 described herein may be used for treating the fluid 100 with light source radiation 11. During use, the fluid 100 is provided in the reactor 30 and irradiated with the light source radiation 11. The method may comprise a batch process. Yet, the method may especially comprise a continuous process. During the continuous process, the fluid 100 is transported through the reactor 30 while irradiating the fluid 100 with the light source radiation 11. Simultaneously a cooling fluid 91 may be transported through and/or along one or more cooling elements 95 as is schematically depicted in Fig. 5.

Hence, the invention provides embodiments of a reactor 30 with light sources 10 that can easily be replaced (for instance when a certain reaction needs a specific wavelength region), and may have a very high efficiency, both in terms of light/radiation output versus power input of the source, and in capturing of the radiation by the reactants. In embodiments, the assembly 1 comprises a hexagonal enclosure formed by six or eight light source elements 19 comprising a heatsink 2, each carrying one or more COBs. The heatsinks 2 may especially facilitate cooling of the light sources 10 and maintaining the COB 10 at a low temperature (for maximum efficiency).

In embodiments, a COB 10 (with or without phosphor) and/or an array of LEDs 10 (not necessarily of the same type) is configured on a heatsink 2, especially on a heatsink in functional contact with a fluid transport channel 7, such as a heatsink arranged in a fluid transport channel. For instance, three to ten of such heatsinks 2 (configured as light source elements 19) may be slit into a frame 80 in such a way that they form a polygonal structure 50 /enclosure. The fluid 100 containing (photosensitive) reactants may be flown through a tiny tube 32 that is coiled around a core comprising a body support 45 with the same polygonal shape 50 (in embodiments with rounded edges to prevent damaging of the tube 32 while coiling, taking the minimum bending radius of the tube into account, depending on the tube diameter). The core 45 and tube 32 may in embodiments be placed in the enclosure from top or bottom side. The coiled tube 32 especially extends over the whole height of the enclosure, so all radiation 11 radiated by the sources 10 may imping on the coiled tube 32, and especially no light source radiation 11 will escape from top or bottom, or imping on other parts of the enclosure.

Optical simulations have shown that with a hexagonal core 45 and a hexagonal light source arrangement 1010 the efficiency is increased by 10% compared to a hexagonal light source arrangement 1010 and a round core 45 with a diameter equal to the smallest size of the hexagon 50. The efficiency may especially be improved when the core 45 has the same polygonal shape 50 as the enclosure. The efficiency increase gradually declines (i.e., smaller benefits) with increasing number of edges 59 of the polygonal shape 50 and is a few percent or less for eight or more edges 59. The efficiency may, in embodiments, may be further increased by minimizing a distance between the tubular arrangement 1130 and the light source arrangement 1010. The light source elements 19, especially with the heatsinks 2, and with the LEDs 10 may be (easily) replaced, for instance to change the wavelength region.

Fig. 7A-C schematically depict further features of the photoreactor assembly 1. In particular, Fig. 7A-C schematically depict thermal contact between a light source 10 and a (cooling) fluid transport channel 7. In each of Fig. 1A-1C, the light source 10 and the fluid transport channel 7 are in functional contact, especially thermal contact, *i.e.,* the fluid transport channel 7 may facilitate cooling of the light source 10. In Fig. 7A, the light source and the fluid transport channel 7 are in direct (fluid) contact. In Fig. 7B, the light source and the fluid transport channel 7 are separated by a reflective element 1011, wherein the reflective element 1011, wherein heat may dissipate from the light source 10 to the fluid transport channel 7 via the reflective element 1011. In Fig. 7C, the light source 10 and the fluid transport channel 7 are separated by a thermally conductive element 2, such as a metal block, or such as fins. Hence, in such embodiment, heat may dissipate from the light source 10 to the fluid transport channel 7 via the thermally conductive element 2.

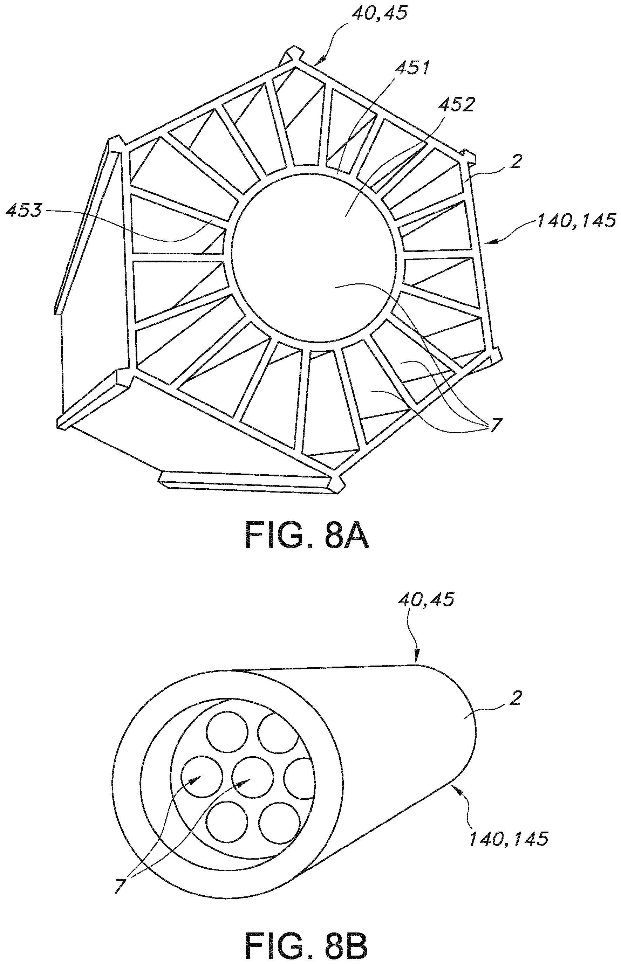

Fig. 8A-B schematically depict features of the photoreactor assembly 1. In particular, Fig. 8A and 8B schematically depict a reactor support element 40 configured to support the reactor 30 (not depicted). The reactor support element 40 especially comprises a support body 45. In the depicted embodiment the support body 45 comprises one or more of the one or more fluid transport channels 7. Further, in the depicted embodiments, the support element 40 may comprise a thermally conductive element 2.

Further, Fig. 8A-B also schematically depict a light source support element 140 configured to support the plurality of light sources 10 (not depicted). The light source support element 140 especially comprises a light source support body 145. In the depicted embodiment, the light source support body 145 comprises one or more of the one or more fluid transport channels 7.

Hence, the reactor support element 40 and the light source support element 140 may essentially have the same shape. Hence, the depicted embodiments, could be used either as reactor support elements 40 or as light source support elements 140.

In particular, Fig. 8A, schematically depicts an embodiment wherein the reactor support element 40 (or the light source support element 14) comprises a hollow body, wherein the hollow body comprises a support body wall 451, wherein the support body wall 451 comprises an inner support body face 452 and an outer support body face 453, wherein the inner support body face 452 defines at least one of the one or more fluid transport channels 7.

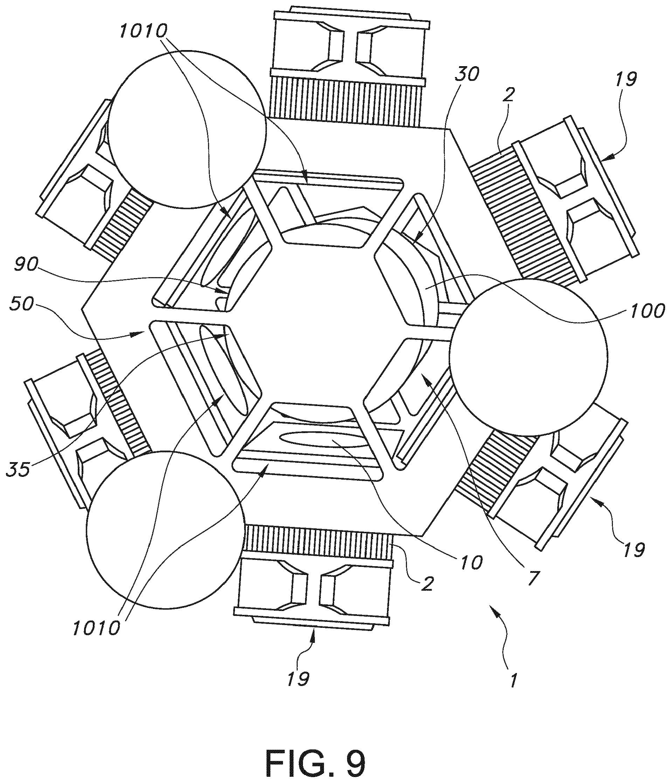

Fig. 9 schematically depicts a view from a first side (see above) of an embodiment of the photoreactor assembly 1. In the depicted embodiment, the photoreactor assembly 1 comprises a reactor 30, wherein the reactor 30 is configured for hosting a fluid 100 to be treated with light source radiation 11. The reactor 30 comprises a reactor wall 35 which is transmissive for the light source radiation 11. The photoreactor assembly 1 further comprises a light source arrangement 1010 comprising a plurality of light sources 10 configured to generate the light source radiation 11, wherein the reactor wall 35 is configured in a radiation receiving relationship with the plurality of light sources 10. The photoreactor assembly 1 further comprises one or more fluid transport channels 7 configured in functional contact with one or more of (i) the reactor 30 and (ii) one or more of the plurality of light sources 10. The photoreactor assembly further comprises a cooling system 90, especially a fan 97, configured to transport a cooling fluid 91 through the one or more fluid transport channels 7. In the depicted embodiment, the cooling system 90 may be arranged at the first side. In further embodiments, the cooling system 90 may be arranged at the second side. The cooling system 90 and the fluid transport channels 7 may provide efficient cooling of the photoreactor assembly 1, which may allow for higher levels of light source radiation 11, which may thereby improve overall performance of the photoreactor assembly 1.

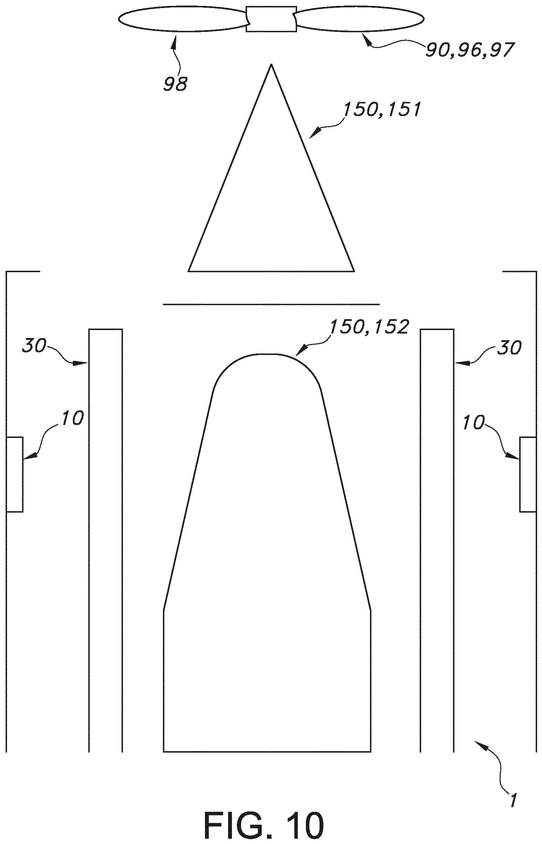

Fig. 10 schematically depicts an embodiment of the photoreactor assembly 1. In the depicted embodiment, a fan 90, 96, 97 is arranged at a first side of the reactor 30, especially wherein the fan 90, 96, 97 is configured to provide an air flow from the fan towards the reactor 30. Further, in the depicted embodiment, the photoreactor assembly 1 comprises two venturi elements 150 configured to guide the air flow.

In particular, a first venturi element 150, 151 may be arranged between, with respect to the air flow, the fan 97 and the reactor 30, wherein the first venturi element is configured to constrict the space for the air flow and thereby (locally) increase the speed of the air flow.

Further, a second venturi element 150, 151 may be arranged at least partially downstream (with respect to the air flow) of the reactor 30, and may be configured to guide an air flow to openings in the photoreactor assembly 1, especially in the support body 45 (not depicted).

In further embodiments, the photoreactor assembly may comprise a first venturi element 150, 151. In further embodiments, the photoreactor assembly may comprise a second venturi element 150, 152.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A photoreactor assembly (1) comprising a reactor (30), wherein the reactor (30) is configured for hosting a fluid (100) to be treated with light source radiation (11) selected from one or more of UV radiation, visible radiation, and IR radiation, wherein the reactor (30) comprises a reactor wall (35) which is transmissive for the light source radiation (11), wherein the photoreactor assembly (1) further comprises:
- a light source arrangement (1010) comprising a plurality of light sources (10) configured to generate the light source radiation (11), wherein the reactor wall (35) is configured in a radiation receiving relationship with the plurality of light sources (10);
- one or more fluid transport channels (7) configured in functional contact with one or more of (i) the reactor (30) and (ii) one or more of the plurality of light sources (10);
- a cooling system (90) configured to transport a cooling fluid (91) through the one or more fluid transport channels (7).

2. The photoreactor assembly (1) according to claim 1, wherein one or more of the following applies: (i) one or more of the plurality of light sources (10) are at least partly configured within at least one of the one or more fluid transport channels (7), (ii) at least part of the reactor wall (35) is configured within at least one of the one or more fluid transport channels (7), and (ii) at least part of the reactor wall (35) defines part of a channel wall (71) of at least one of the one or more fluid transport channels (7).

3. The photoreactor assembly (1) according to any one of the preceding claims 1-2, further comprising a reactor support element (40) configured to support the reactor (30), wherein the reactor support element (40) comprises a support body (45), wherein at least part of the reactor (30) is configured in thermal contact with the support body (45), and wherein the support body (45) comprises one or more of the one or more fluid transport channels (7).

4. The photoreactor assembly (1) according to claim 3, wherein the support body (45) comprises a hollow body, wherein the hollow body comprises a support body wall (451), wherein the support body wall (451) comprises an inner support body face (452) and an outer support body face (453).

5. The photoreactor assembly (1) according to claim 4, wherein the inner support body face (452) defines at least one of the one or more fluid transport channels (7), and wherein the reactor (30) is configured at a side of the outer support body face (453).

6. The photoreactor assembly (1) according to any one of the preceding claims 4-5, wherein the inner support body face (452) defines a support body space (454), wherein 50-99 vol.% of the support body space (454) is defined by a plurality of fluid transport channels (7).

7. The photoreactor assembly (1) according to any one of the preceding claims 4-6, wherein the support body wall (451) has a circular cross-section, wherein the inner support body face (452) and the outer support body face (453) define diameters d1,d2, respectively, wherein 0.65^{∗}d2≤d1≤0.9^{∗}d2.

8. The photoreactor assembly (1) according to any one of the preceding claims 1-2, further comprising a light source support element (140) configured to support the plurality of light sources (10), wherein the light source support element (140) comprises a light source support body (145), wherein the plurality of light sources are configured in functional contact with the light source support body (145), and wherein the light source support body (145) comprises one or more of the one or more fluid transport channels (7).

9. The photoreactor assembly (1) according to any one of the preceding claims, wherein the cooling system (90) comprises a gas transporting device (96) selected from the group consisting of an air blower and a fan (97).

10. The photoreactor assembly (1) according to claims 9 and 7, wherein the fan (97) comprises ventilator blades (98), wherein the ventilator blades (98) define a blade diameter d3, wherein d3>d2 according to claim 7.

11. The photoreactor assembly (1) according to any one of the preceding claims, comprising a plurality of light source elements (19), wherein each light source element (19) comprises one or more of the plurality of light sources (10), wherein each of the light source elements (19) comprises at least one thermally conductive element (2) configured in functional contact with the one or more of the plurality of light sources (10), wherein the light source element (19) comprises a reflective element (1011) at a surface (190) of the light source element (19) facing the reactor wall (35), wherein the reflective element (1011) is reflective for the light source radiation (11), wherein the photoreactor assembly (1) further comprises a second fluid transporting device (196) configured to transport a cooling fluid (91) along one or more of the thermally conductive elements (2) configured in functional contact with one or more of the plurality of light sources (10).

12. The photoreactor assembly (1) according to any one of the preceding claims, wherein the light source arrangement (1010) defines a polygon (50) comprising polygon edges (59), wherein the polygon (50) comprise 4-10 polygon edges (59), wherein the reactor (30) is a tubular reactor (130), and wherein the reactor wall (35) defines the tubular reactor (130); wherein the tubular reactor (130) is configured in a tubular arrangement (1130), and wherein the tubular arrangement (1130) comprises a coiled tubular arrangement (1131), wherein the tubular reactor (130) is helically coiled.

13. The photoreactor assembly (1) according to any one of the preceding claims, wherein the plurality of light sources (10) comprise one or more of chips-on-board light sources (COB), light emitting diodes (LEDs), and laser diodes.

14. A method for treating a fluid (100) with light source radiation (11), wherein the method comprises:
- providing the photoreactor assembly (1) according to any one of the preceding claims;
- providing the fluid (100) to be treated with the light source radiation (11) in the reactor (30); and
- irradiating the fluid (100) with the light source radiation (11).

15. The method according to claim 14, comprising transporting the fluid (100) through the reactor (30) while irradiating the fluid (100) with the light source radiation (11), and transporting a cooling fluid (91) through the one or more fluid transport channels (7), wherein the cooling fluid (91) comprises air.
